Europäisches Patentamt

European Patent Office

Office européen des brevets

(19)

(11) **EP 1 065 188 A1**

(12) **DEMANDE DE BREVET EUROPEEN**

(43) Date de publication:
**03.01.2001 Bulletin 2001/01**

(51) Int Cl.⁷: **C04B 28/02**, C04B 40/00,
B28B 7/00
// (C04B28/02, 14:28, 18:14,
24:22),
(C04B28/02, 14:28, 18:14,
24:26)

(21) Numéro de dépôt: **00401871.9**

(22) Date de dépôt: **30.06.2000**

(84) Etats contractants désignés:
**AT BE CH CY DE DK ES FI FR GB GR IE IT LI LU
MC NL PT SE**
Etats d'extension désignés:
**AL LT LV MK RO SI**

(30) Priorité: **01.07.1999 FR 9908418**

(71) Demandeur: **SOLLAC
92800 Puteaux (FR)**

(72) Inventeur: **Schwartzentruber, Arnaud
78300 Poissy (FR)**

(74) Mandataire: **Ventavoli, Roger
USINOR,
Direction Propriété Industrielle,
Immeuble "La Pacific",
La Défense,
11/13 Cours Valmy,
TSA 10001
92070 La Défense (FR)**

(54) **Procédé de préparation d'une pièce en béton présentant une surface lisse, pièce en béton et utilisation comme pièce de peau ou comme outil d'emboutisage**

(57) Procédé comprenant :

- une étape de préparation d'une formulation de béton comprenant au moins un agent tensio-actif adapté, en nature et en proportions, pour que, additionné à de l'eau pure, il confère à l'eau additionnée une énergie de surface inférieure à 50 mJ/m².

- une étape de coulage de ladite formulation dans un moule dont les parois ne sont pas enduites d'agent de démoulage hydrophobe et présentent une énergie de surface inférieure à 35 mJ/m²,
- une étape de cure dont le taux d'humidité et la durée sont amenés à un niveau suffisamment élevé pour optimiser la facilité de démoulage et la qualité lisse de ladite surface.

EP 1 065 188 A1

**Description**

L'invention concerne un procédé de fabrication de pièces en béton hydraulique à surface lisse, sans bulles, voire brillante, comprenant classiquement :

- une étape de préparation d'une formulation de béton comprenant au moins un liant hydraulique, de l'eau pour hydrater le liant et une poudre fine et réactive avec ledit liant hydraté,
- une étape de coulage de ladite formulation dans un moule aux formes de ladite pièce, au moins au contact des parois de ce moule correspondant à ladite surface lisse,
- et une étape de cure de ladite pièce coulée et moulée adaptée pour permettre la réaction quantitative de ladite poudre sur le liant hydraté.

Dans ce procédé, on incorpore en général à la formulation au moins 10% en poids de sable ou granulats ; il arrive, à l'inverse, que la partie superficielle de la pièce soit coulée sans granulats et soit donc essentiellement constituée de pâte de béton.

Dans ce procédé, on incorpore en général à la formulation un agent de dispersion, comme des agents plastifiants ou superplastifiants, de manière à obtenir alors ce qu'on appelle communément des bétons dits à Hautes Performances (« BHP ») voire à Très Hautes Performances (« BTHP »).

Pour certaines applications, par exemple pour la réalisation de pièces de peau en béton pour bâtiment, on cherche à obtenir, au moins sur une face, un état de surface lisse, voire brillant ; l'obtention d'un tel état de surface nécessite souvent des étapes supplémentaires dans le procédé, ce qui est économiquement pénalisant ; l'invention a pour premier but de remédier à cet inconvénient ; comme exemple de pièces de peau en béton, on peut citer des tuiles de couverture, des panneaux de bardage, des dalles pour le sol, des margelles de balcon ou de terrasse, des bancs ou des tables d'extérieur, des éléments de mobilier urbain.

Dans un autre domaine, celui de la mise en forme de tôles par emboutissage, la réalisation d'outils d'emboutissage en béton hydraulique offre une solution technique moins onéreuse que celle, plus classique, d'outils en béton de résine voire d'outils en acier ; le béton hydraulique a un prix de revient largement inférieur à celui du béton de résine déjà utilisé pour la fabrication des outils prototypes, et présente, en outre, une plus grande facilité de mise en oeuvre et un bon comportement à l'usure bien adapté à l'emboutissage en série.

Les brevets ou demandes de brevets EP 052 380 (PORTLAND), EP 269 715 (PORTLAND), EP 273 181 (CEMCOM), WO 87/01627 décrivent l'utilisation de béton hydraulique à hautes performances (« BHP ») ou à très hautes performances (« BTHP ») pour la fabrication d'outils d'emboutissage et des compositions de béton adaptées à cet effet ; l'article intitulé « Propriétés constructives des BHP », écrit par F. de LARRARD et Y. MALIER, publié dans la revue « Annales de l'ITBTP », n°479, pp. 79-106, déc. 1989, décrit également des compositions de béton « BHP ».

Selon ces documents, les compositions de béton de ce type sont préparées à partir de mélanges comprenant :

- un liant hydraulique comme du ciment : 17 à 30% en poids ;
- des granulats, comme du sable de quartz ou du Corindon : 43 à 77% en poids ;
- des particules très fines, d'un diamètre moyen généralement inférieur ou égal à 1 µm environ, et réactives sur le ciment hydraté, comme de la microsilice ou une autre matière pouzzolanique : 10 % à 30 % par rapport à la masse de ciment, soit généralement 1,7 % à 9 % en poids ;
- un agent de dispersion, plastifiant ou superplastifiant : 0,3 à 1% en poids ;
- de l'eau de gâchage : 4 à 7% en poids .

Ces compositions peuvent également contenir du laitier, notamment du laitier de haut-fourneau.

Comme autre matière pouzzolanique, on peut utiliser des cendres volantes pouzzolaniques.

Comme agent de dispersion de type superplastifiant, on utilise classiquement un sel sodique de condensat de formaldéhyde et d'acide sulfonique naphtalène, ou un produit de type mélamine ou polyacrylate.

Ces compositions peuvent également contenir des fibres de renforcement et la pièce en béton peut être renforcée par des armatures, placées dans le moule avant coulage du béton.

Pour obtenir un outil en béton hydraulique, on coule la composition dans un moule aux dimensions de l'outil, qui tiennent compte du retrait ; le coulage de la composition de béton est généralement effectué sous vibration de manière à éliminer les bulles d'air occluses et à obtenir un béton aussi peu poreux que possible ; comme moyen de vibration, on utilise couramment une aiguille vibrante, une table vibrante voire un coffrage vibrant.

La nature, la granulométrie et les proportions des constituants du béton, notamment du superplastifiant, et les conditions de coulage du béton, doivent être adaptées pour obtenir un bon écoulement, naturel ou sous pression, du béton dans le moule et un bon remplissage de ce moule.

Après coulée du béton dans le moule, les conditions de cure sont souvent déterminantes pour améliorer les propriétés mécaniques du béton et importantes pour réduire le retrait de dessiccation ; elles sont adaptées pour hydrater convenablement le liant et pour faciliter les réactions pouzzolaniques des particules fines pouzzolaniques avec la portlandite $Ca(OH)_2$ provenant notamment du liant hydraulique (effet pouzzolanique) ; l'hydratation du liant n'est généralement pas complète, le seuil « convenable » correspondant à une valeur classique d'environ 0,4 du rapport eau/ciment

Les grains de silice réactive et très fine, qui sont beaucoup plus petits que les grains de ciment, comblent par ailleurs les vides situés entre les grains de ciment et contribuent alors à la compacité du mélange (effet granulaire).

Les réactions pouzzolaniques débutent en général un jour après le coulage et ne se produisent qu'en présence d'eau ; comme la dessiccation du béton commence par la surface de la pièce qui est exposée à l'air libre, il est important de limiter cette dessiccation au moins durant les premiers jours de cure, de manière à maintenir un milieu suffisamment humide ; à cet effet, on ne démoule pas immédiatement après coulage et on maintient pendant 2 à 3 jours le moule sous sac étanche dans un environnement à forte humidité relative ; ce maintien sous humidité permet aussi de limiter les risques de fissuration aux jeunes âges qui sont dus au retrait de dessiccation.

Après cette période de cure, on démoule la pièce en béton et on obtient la pièce en béton, qui, après un délai classique de l'ordre de 28 jours, temps de cure compris, est apte à l'usage, par exemple comme outil d'emboutissage ou comme pièce de peau de bâtiment.

Après cette cure, une variante des procédés de l'art antérieur consiste à effectuer un traitement thermique, qui permet d'augmenter la vitesse de montée en résistance du béton et de réduire ainsi les délais de fabrication des pièces en béton ; un traitement thermique adapté permet donc d'accélérer les réactions pouzzolaniques et d'améliorer encore les résistances mécaniques à long terme du béton.

On peut par exemple effectuer ce traitement à la vapeur d'eau ; à cet effet, on recouvre les outils d'une bâche et on injecte de la vapeur sous la bâche de manière à régler la température de cure à la valeur souhaitée ; cette technique permet d'augmenter la température tout en maintenant une humidité élevée favorable aux réactions pouzzolaniques.

Le cahier des charges pour pièces de peau de bâtiment concerne, outre les caractéristiques classiques dans le domaine du génie civil, l'état de surface des pièces, qui doit être lisse, sans bulle, voire brillant.

Le cahier des charges des outils d'emboutissage est atypique dans le domaine du génie civil pour lesquelles les bétons sont en général formulés ; même si la résistance à la compression des bétons à hautes et très hautes performances (appelés respectivement « BHP » et « BTHP ») est suffisante pour reprendre les efforts " volumiques " imposés à des outils d'emboutissage, les exigences spécifiques concernant ces outils en béton hydraulique portent alors principalement sur leurs caractéristiques de surface ; en effet, afin de pouvoir mettre en forme des pièces de qualité, il est important que la surface travaillante de l'outil en sortie de moule soit exempte de défaut, que ses dimensions respectent des tolérances géométriques très strictes, que les caractéristiques mécaniques et dimensionnelles de l'outil soient maintenues au cours de nombreux cycles d'emboutissage ; on peut ainsi citer les contraintes suivantes concernant la surface de l'outil en béton :

- surface lisse exempte de bulle d'air, comme pour les pièces de peau pour bâtiment ;
- faible coefficient de frottement avec la tôle à emboutir, faible vitesse d'usure et dureté élevée ;
- usure homogène de la pâte de ciment et des granulats du béton, pour éviter l'apparition de points durs à la surface ;
- résistance élevée aux chocs (résilience) et à la fatigue ;
- compacité importante au voisinage de la surface, micro-fissuration réduite et faible perméabilité aux liquides afin de limiter la pénétration d'agents agressifs dans la pièce en béton.

Les techniques classiques de fabrication de pièces en béton hydraulique, concernant notamment la conception des moules, la préparation des surfaces coffrantes et le bétonnage, ne permettent pas d'obtenir facilement des pièces ayant une surface lisse, sans bulles, voire brillante.

Par exemple, les moules des outils sont généralement fabriqués en bois ou en acier, et, afin d'empêcher l'adhérence des parois du moule à la surface de la pièce en béton, on enduit classiquement la surface du moule d'un produit de décoffrage, qui est souvent choisi parmi les huiles ou les cires ; au démoulage, on constate généralement que la surface de la pièce obtenue présente des défauts de bullage, qu'elle est rugueuse et, notamment, plus poreuse que le béton en profondeur, dans le volume de la pièce.

Ces défauts de bullage proviennent de la migration d'air vers l'interface entre le moule et le béton, où il forme des bulles.

Dans ces conditions et dans le meilleur des cas, on ne parvient à limiter le bullage en surface que dans le cas de moules de formes simples, ou, sinon, qu'en utilisant de manière prolongée des moyens importants de vibration.

L'invention a pour but de parvenir, sans ces inconvénients de densification ou de vibration, à limiter le bullage à la surface de pièces en béton.

Concernant plus spécifiquement l'emboutissage à l'aide d'outils en béton hydraulique, ce n'est pas la résistance en volume du béton qui limite la capacité d'un outil à emboutir un grand nombre de pièces, mais ses caractéristiques mécaniques de surface.

On constate en effet que la résistance d'une pièce en béton est généralement nettement plus faible au niveau sa surface que dans le volume ; comme cette surface s'use rapidement, on ne parvient pas à emboutir des tôles en petites ou moyennes séries tout en respectant les tolérances dimensionnelles requises.

On constate, notamment dans les zones fortement sollicitées de la surface, une dégradation prématurée de l'outil d'emboutissage en béton ; ces défauts s'amplifient au cours des cycles, l'outil devient rapidement inutilisable et sa durée de vie est courte.

L'invention a également pour but d'améliorer les propriétés mécaniques de surface de pièces en béton, pour développer leur utilisation comme outils d'emboutissage.

A cet effet, l'invention a pour objet un procédé de préparation d'une pièce en béton présentant une surface lisse comprenant :

- une étape de préparation d'une formulation de béton comprenant au moins un liant hydraulique, de l'eau pour hydrater le liant,
- une étape de coulage de ladite formulation dans un moule aux formes de ladite pièce, au moins au contact des parois de ce moule correspondant à ladite surface lisse,
- une étape de cure de ladite pièce coulée dans son moule,
- et une étape de démoulage,

   caractérisé en ce que :

- les parois dudit moule, correspondant à ladite surface lisse, ne sont pas enduites d'agent de démoulage hydrophobe et présentent une énergie de surface inférieure à 35 mJ/m$^2$,
- ladite formulation comprend au moins un agent tensio-actif adapté, en nature et en proportions, pour que, additionné à de l'eau pure, il confère à l'eau additionnée une énergie de surface inférieure à 50 mJ/m$^2$.
- le taux d'humidité et la durée de cure sont amenés à un niveau suffisamment élevé pour optimiser la facilité de démoulage et la qualité lisse de ladite surface.

L'invention peut également présenter une ou plusieurs des caractéristiques suivantes :

- la paroi du moule, la nature et les proportions dudit agent tensio-actif, sont choisis de manière à ce que l'angle de mouillage d'une goutte d'eau pure additionnée selon ces proportions de cet agent tensio-actif et appliquée sur ladite paroi soit inférieur ou égal à 65°.
- les parois dudit moule sont à base de matériau polymère ou sont revêtues de matériau polymère.
- ledit matériau polymère est choisi dans le groupe comprenant les polychlorures de vinyle, les polyoléfines comme le polypropylène ou le polyéthylène, les polyamides, les polyacrylates et les polyméthacrylates.
- ladite formulation de béton comprend également :

    - une poudre fine pour obtenir un effet granulaire de compacité, et réactive avec les produits d'hydratation notamment dudit liant,
    - et au moins un agent plastifiant ou superplastifiant pour obtenir un effet dispersant et rhéologique.

- ladite poudre est à base de silice réactive de manière pouzzolanique avec lesdits produits d'hydratation.
- l'agent superplastifiant est choisi dans le groupe comprenant les sels sodique de condensat de formaldéhyde et d'acide sulfonique naphtalène et les produit de type mélamine ou polyacrylate.
- l'au moins un agent tensio-actif est aussi l'agent plastifiant ou superplastifiant.
- l'au moins un agent tensio-actif présente un caractère amphotère hydrophile/hydrophobe.
- la concentration en agent tensio-actif et, le cas échéant, en agent plastifiant ou superplastifiant dans ladite formulation est supérieure au seuil de saturation d'absorption par la surface des différentes particules solides de ladite formulation.
- ladite formulation comprend des granulats dans une proportion supérieure à 10% en poids.

L'invention a également pour objet l'utilisation du procédé selon l'invention pour fabriquer des pièces de peau, notamment des éléments de couverture, de bardage, de cloisonnement ou de sol de bâtiment ou des éléments de mobilier urbain.

L'invention a également pour objet l'utilisation du procédé selon l'invention pour fabriquer des outils d'emboutissage.

Dans ce cas, et lorsque ladite formulation comprend des granulats, ces granulats sont de préférence choisis de manière à ce qu'ils présentent une vitesse d'usure comparable à celle de la pâte dudit béton.

L'invention a également pour objet une pièce en béton susceptible d'être obtenue par le procédé selon l'invention à partir d'une formulation utilisant du ciment comme liant et comprenant de la poudre à base de silice caractérisée en ce qu'elle présente au moins une surface lisse sans bulle correspondant à une couche externe composée de fumée de silice, de portlandite et, le cas échéant, de calcite.

De préférence, l'épaisseur de ladite couche externe est alors supérieure ou égale à 5 µm.

L'invention a également pour objet une pièce en béton susceptible d'être obtenue par le procédé selon l'invention à partir d'une formulation utilisant du ciment comme liant et une poudre de silice comme poudre réactive caractérisée en qu'elle présente au moins une surface lisse sans bulle qui comprend une couche « intermédiaire » dans laquelle la proportion de poudre réactive de silice est au moins égale à 1,5 fois la proportion moyenne de cette poudre dans ladite formulation.

De préférence, l'épaisseur de ladite couche « intermédiaire » est alors comprise entre 10 et 150 µm.

La pièce en béton selon l'invention cumule de préférence les caractéristiques des pièces ci-dessus, avec ladite couche externe appuyée sur ladite couche « intermédiaire ».

L'invention sera mieux comprise à la lecture de la description qui va suivre, donnée à titre d'exemple non limitatif, et en référence aux figures annexées sur lesquelles :

- la figure 1 est courbe granulométrique des granulats utilisés dans les compositions de béton selon l'invention,
- la figure 2 illustre le pouvoir tensio-actif de différents agents superplastifiants utilisés dans les compositions de béton selon l'invention, exprimé en termes d'angle de contact de mouillage sur une surface conforme à l'invention, dont l'énergie de surface est inférieure à 35 mJ/m$^2$.
- les figures 3 et 4 illustrent les propriétés mécaniques de bétons selon l'invention, évaluées (MPa) à différentes périodes (jours) après coulage,
- les figures 5, 6 et 7 décrivent la forme des éprouvettes en béton et les modalités des essais de frottement de tôle d'acier sur béton selon l'invention.
- les figures 8A et 8B décrivent la forme des poinçons d'emboutissage utilisés pour tester des pièces en béton selon l'invention,
- les figures 9 et 10 illustrent les résultats de frottement obtenus : usure en mm pour la figure 9, coefficient de frottement dynamique pour la figure 10, en fonction du nombre de cycles de frottement,
- la figure 11 est un schéma de principe de l'essai de micro-pénétration, et les figures 12 et 13 présentent les résultats (force d'enfoncement en daN) des essais en fonction de l'enfoncement (mm),
- les figures 14 et 15 concernent des résultats d'analyse physico-chimique de surfaces en béton selon l'invention : profil « EDS » de l'oxyde de zirconium (%) en fonction de la distance (µm) par rapport à la surface pour la figure 14, et diffractogrammes RX de trois couches prélevées à partir de la surface pour la figure 15 (nombre d'impulsions RX-Cu-Ka par seconde en ordonnée en fonction de l'angle de diffraction 2 θ en abscisse).

On va d'abord décrire un type de formulation de béton utilisable pour mettre en oeuvre l'invention, notamment dans le cadre d'une application comme outil d'emboutissage ; on choisit d'abord une formulation apportant la résistance en volume souhaitée ; pour obtenir une résistance mécanique à la compression supérieure ou égale à 70 MPa, on choisit de préférence une formulation de type « BHP » ou « BTHP» ; on choisit également la nature du granulat de manière à éviter une usure différentielle entre la pâte de béton et les granulats qui composent l'outil en béton, la pâte de béton désignant le mélange de liant et de poudre réactive, hydraté et « réagi ».

On détermine d'une manière connue en elle-même le dosage optimal de granulats, de liant hydraulique, de poudre fine et réactive, de superplastifiant et d'eau, notamment de manière à garantir un remplissage optimal des vides entre les grains des granulats.

Concernant les granulats, l'utilisation de granulats siliceux semble inadaptée pour fabriquer des outils d'emboutissage, car ces granulats seraient alors plus durs que la pâte de béton et l'usure de l'outil ne serait pas homogène ; après plusieurs cycles d'emboutissage, un outil en béton à base de granulats siliceux présente une surface travaillante où les granulats deviennent de plus en plus apparents et où des points durs apparaissent, ce qui provoque des rayures sur la surface des tôles embouties et des arrachements de matière, alors que le coefficient de frottement augmente.

Comme exemple de granulats permettant d'assurer une usure homogène de la pièce en béton utilisée comme outil d'emboutissage, on peut ainsi utiliser des granulats calcaires durs, comme les calcaires des carrières du Boulonnais.

Concernant la poudre fine et réactive de la formulation de béton utilisée, on utilise d'une manière classique de la fumée de silice ; l'effet de la fumée de silice sur les propriétés des mortiers et bétons est double : un effet granulaire et un effet pouzzolanique.

L'effet granulaire provient de la forme sphérique des grains de la poudre utilisée, qui est une forme optimale du point de vue rhéologique ; la granulométrie de la poudre est classiquement comprise entre 0,01 pm et quelques micromètres et permet de combler efficacement les vides situés entre les grains de ciment ; grâce à l'amélioration rhéologique de la formulation de béton apportée par cette poudre, on peut réduire notablement la quantité d'eau de gâchage : cette diminution du rapport eau/ciment (« E/C ») dépend évidemment de la nature du ciment et de la fumée de silice utilisées.

L'effet pouzzolanique correspond à la réaction de cette fumée de silice avec les cristaux de portlandite (Ca (OH)$_2$) qui proviennent de l'hydratation des grains de ciment pour former des silicates de calcium hydratés (ou « C-S-H ») amorphes ; comme ces silicates sont plus denses et plus résistants que les cristaux de portlandite, l'effet pouzzolanique contribue à l'amélioration des caractéristiques mécaniques du béton.

La quantité de silice qui garantit la transformation complète de toute la chaux ou portlandite représente en général 25 à 30% de la masse de ciment ; toutefois, cette quantité optimale dépend de la nature et de la granulométrie du ciment employé.

On constate généralement que, plus l'effet pouzzolanique est marqué, moins l'effet granulaire de réduction d'eau est important ; comme les variations d'effet granulaire compensent alors celles d'effet pouzzolanique, on constate que les résistances mécaniques de différents mortiers, mesurées à 28 jours, varient peu avec la nature des fumées de silice,.

Ainsi, le dosage optimal en fumées de silice pour l'obtention de béton à haute résistance se situe généralement entre 10 et 25 % par rapport à la masse de ciment ; de manière générale, la proportion de fumée de silice employée répondra aux règles suivantes :

- tant que l'on vise des résistances inférieures à 70 MPa, l'utilisation de fumée de silice n'est pas indispensable ;
- pour des résistances comprises entre 70 et 100 MPa (domaine des « BHP »), l'introduction de fumée de silice est nécessaire ; comme le gain en résistance est plus rapide pour les faibles dosages en fumée de silice, on se place au niveau de l'optimum économique, à une proportion de l'ordre de 10% de la quantité de ciment ;
- pour des résistances supérieures 100 MPa (domaine des « BTHP »), on choisira un dosage en fumée de silice conduisant à la compacité maximale de la pâte, et donc à une proportion comprise entre 15 et 30% de la quantité de ciment.

Concernant le superplastifiant, on connaît les sels sodiques de condensat de formaldéhyde et d'acide sulfonique naphatalène, des produits de type mélamines et des produits de type polyacrylates ; ces produits conviennent aux formulations de béton qui contiennent de la fumée de silice.

La proportion de superplastifiant dans la formulation est dosée légèrement au-delà de la « dose de saturation » déterminée par la « nouvelle méthode des coulis » de l'AFREM publiée dans le Bulletin des Laboratoires des Ponts et Chaussées - 202 - mars-avril 1996 - Réf. 4012 - pp. 61-69 par F. de LARRARD et al. ; il convient d'éviter un dosage trop élevé qui risque d'entraîner de l'air et de provoquer des bulles.

Les agents de dispersion ou agents fluidifiants pour béton, dits « plastifiants », « superplastifiants » ou aussi « réducteurs d'eau », sont généralement des polymères de synthèse adaptés pour améliorer fortement la dispersion des particules solides de la formulation de béton ; cet effet provient de l'adsorption du produit à la surface des particules et de l'apparition de forces de répulsion électrostatiques et/ou stériques entre ces particules, qui empêchent la formation de ponts entre ces particules et favorisent donc leur dispersion ; ces agents ou adjuvants contribuent donc également à la diminution des quantités d'eau nécessaires pour le gâchage, à maniabilité donnée, et donc également à l'augmentation des caractéristiques mécaniques du béton.

Les agents superplastifiants ont un effet dispersant beaucoup plus important que les agents plastifiants et peuvent être utilisés dans des proportions beaucoup plus importantes sans risques d'effets secondaires néfastes, comme le retard de prise.

La proportion d'agent plastifiant ou superplastifiant est adaptée d'une manière connue en elle-même pour améliorer sensiblement les propriétés rhéologiques de la formulation de béton, de sorte qu'elle est supérieure au seuil de saturation d'absorption par la surface des différentes particules solides composant le béton, même par celle de la fumée de silice qui peut être supérieure à 20 m$^2$/g ; selon la thèse de doctorat en Génie Civil de O. BONNEAU, soutenue le 8 décembre 1997 à l'Université de Sherbrooke, on précise, à la page 121, que la proportion correspondant à l'optimum rhéologique vaut même 1,88 fois la proportion correspondant à la saturation des surfaces des poudres réactives du béton ; puisque la proportion d'agent plastifiant ou superplastifiant est supérieure au seuil de saturation des surfaces, une partie de l'agent plastifiant ou superplastifiant reste donc disponible pour s'absorber éventuellement sur les parois du moule, et contribuer ainsi à l'effet poursuivi par l'invention comme expliqué ci-après.

Pour mettre en oeuvre l'invention dans le cas de moules de formes complexes, la formulation de béton selon l'invention contient un agent tensio-actif adapté pour assurer un bon mouillage de la surface du moule par la formulation en cours de coulage et après coulage ; selon l'invention, il est préférable en effet que la surface du moule soit aussi mouillante que possible par la formulation, c'est à dire que l'angle de contact d'une goutte d'eau additionnée de cet agent et déposée sur la surface du moule soit aussi faible que possible, c'est à dire que cette goutte d'eau additionnée soit aussi étalée que possible.

L'angle de contact d'un liquide sur une surface dépend à la fois de la nature de ce liquide et de celle de la surface ; pour obtenir un critère propre au liquide et indépendant de la surface, on retient alors la valeur d'énergie de surface du liquide.

On considère que l'énergie de surface de l'eau pure est de l'ordre de 72 mJ/m$^2$.

Selon l'invention, il convient donc que la formulation contienne un agent tensio-actif adapté, en nature et en proportion, pour que, additionné à de l'eau pure, il confère à l'eau additionnée une énergie de surface inférieure à 50 mJ/m$^2$.

Il convient que la proportion d'agent tensio-actif dans la formulation de béton soit supérieure au seuil de saturation d'absorption par la surface des différentes particules solides composant le béton, de manière à ce qu'une partie de cet agent reste disponible pour s'absorber sur les parois du moule.

De préférence, comme agent tensio-actif, on choisit un agent superplastifiant du béton ; de préférence, on utilise donc dans la formulation l'agent superplastifiant qui présente le pouvoir tensio-actif le plus élevé.

De préférence, le béton utilisé pour mettre en oeuvre l'invention ne contient pas de fibres de renforcement, car l'utilisation de fibres n'est pas adaptée à la réalisation d'outils d'emboutissage ; en effet, lors des cycles répétés d'emboutissage, les fibres proches de la surface travaillante de l'outil en béton sont mises à nu puis arrachées, ce qui crée des défauts au niveau de la surface de l'outil ; ces défauts s'amplifient très rapidement et rendent l'outil inutilisable.

Dans la première étape du procédé, on prépare la formulation de béton par mélange de ses différents constituants : granulats, fumée de silice et superplastifiant précités, mais également ciment comme liant hydraulique et eau de gâchage, dans les proportions adaptées pour obtenir la plus forte compacité et la plus faible porosité tout en conservant la maniabilité nécessaire au coulage de l'outil dans son moule ; l'adaptation de ces proportions fait l'objet de tests d'optimisation de routine.

Un des aspects essentiel de l'invention réside dans le choix du matériau du moule dans lequel la formulation de béton doit être coulée pour former l'outil, et, plus particulièrement, de la surface de ce moule, au moins de celle qui correspond à la surface travaillante de l'outil en béton à couler ; selon l'invention, il convient en effet que cette surface :

- soit aussi peu mouillante que possible par de l'eau qui est un liquide fortement polaire ; il convient donc que l'angle de contact d'une goutte d'eau pure déposée sur cette surface du moule soit aussi élevé que possible, c'est à dire que cette goutte d'eau soit aussi peu étalée que possible.
- présente une énergie de surface aussi faible que possible : la limite pratique supérieure correspondant à 35 mJ/m$^2$ environ.

De par ces caractéristiques de faible mouillabilité vis à vis d'un liquide polaire, il convient donc que cette surface présente un caractère apolaire.

Enfin, toujours pour obtenir une pièce en béton de bonne qualité de surface et faciliter le démoulage, il convient que cette surface soit inerte ou non réactive vis à vis des composants de la formulation de béton, notamment de la poudre fine et réactive.

De par ces caractéristiques de la surface des parois du moule, on parle donc de moules ayant des parois à énergie de surface inférieure à 35 mJ/m$^2$, apolaires, inertes et non réactives.

De préférence, on utilise des moules réalisés en matériaux à base de polychlorure de vinyle ou de polyoléfines comme le polypropylène ou le polyéthylène, ou de polyamide.

On peut également utiliser des moules réalisés en matériaux quelconques, du moment que leur surface de moulage est dotée d'un revêtement conférant une énergie de surface inférieure à 35 mJ/m$^2$, apolaire, inerte et non réactive.

De préférence, on utilise des moules revêtus d'une peinture acrylique.

Pour réaliser des moules de grande taille ayant des parois conformes à l'invention, plusieurs voies peuvent être envisagées :

- usinage direct du moule dans des planches en matière plastique non mouillante, qui doivent alors présenter une grande rigidité et une bonne stabilité dimensionnelle et chimique ;
- usinage du moule dans une matière bon marché facilement usinable, que l'on revêt ensuite d'une couche non mouillante, par exemple une couche de peinture non mouillante ;
- préparation d'une « pré-forme » à partir de modules existants, que l'on recouvre ensuite d'une cire calibrée et non mouillante, aux dimensions du moule.

Dans tous les cas, la surface du moule doit être insoluble dans l'eau et inattaquable par les bases, car la formulation de béton est très basique (pH>11 avec fumée de silice, pH>13 sans fumée de silice).

Pour limiter encore le risque de défauts de bulles à la surface de l'outil conformément au but poursuivi par l'invention, il convient que la surface du moule soit la plus lisse possible, car toute zone rugueuse ou toute piqûre ou rayure de la surface du moule risque de provoquer l'accrochage de bulles sur la surface correspondante du béton.

Dans la deuxième étape du procédé, on coule donc la formulation de béton dans le moule en procédant au « vibrage » du béton pour bien remplir le moule et éliminer les bulles d'air occluses ; grâce à l'utilisation d'un moule aux parois conformes à l'invention, et, notamment dans le cas de moules de formes complexes, à la présence d'agent tensio-actif en quantité suffisante dans la formulation de béton, les moyens à mettre en oeuvre pour éliminer les bulles d'air à ce stade sont sensiblement réduits en temps ou en importance.

Il est tout à fait déconseillé d'enduire préalablement le moule d'agent de démoulage, notamment s'il est hydrophobe.

Dans la troisième étape du procédé, les conditions de cure sont classiquement déterminantes vis à vis des propriétés mécaniques du béton mais, spécialement dans le cas de l'invention, déterminantes également vis à vis des conditions de démoulage.

D'une manière classique, on sait qu'il est important de ralentir la dessiccation de la pièce coulée au moins pendant les deux premiers jours après coulage, de manière à maintenir un milieu suffisamment humide propice aux réactions pouzzolaniques ; à cet effet, on ne démoule donc pas immédiatement après la prise du béton, mais on conserve au contraire la pièce en béton dans son moule pendant plusieurs jours dans un environnement à forte humidité relative, par exemple sous sac étanche.

Cette précaution classique est particulièrement importante dans le cas de l'invention pour pouvoir décoffrer facilement la pièce en béton et pour parvenir à obtenir une surface sans bulles, lisse et brillante ; on a constaté, à l'inverse, que, si la pièce de béton était conservée dans son moule à l'air libre sans précautions et/ou pendant une durée insuffisante, le béton adhérait fortement aux parois du moule et était très difficile à démouler et que, de plus, on ne parvenait pas à obtenir une surface sans bulles, lisse et brillante.

Cette précaution est également importante pour les propriétés mécaniques de surface du béton.

Une attention toute particulière doit donc être prise pour la conservation du béton sous humidité durant les premiers jours après coulage.

Après cette période de cure, on démoule la pièce en béton ; selon sa forme, la pièce obtenue peut servir d'outil d'emboutissage ou de pièce de peau pour bâtiment.

On constate alors que, conformément aux objectifs poursuivis par l'invention, la surface de la pièce obtenue présente un état lisse et sans bulles, du moins la surface correspondant aux parois du moule peu mouillantes.

Dans le cas où la formulation de béton contient un agent superplastifiant, on constate en outre que cette surface est brillante.

Ainsi, le procédé de fabrication de pièce en béton selon l'invention permet d'obtenir des surfaces lisses et sans bulles, voire brillantes, ce qui est particulièrement appréciable pour la fabrication d'outils d'emboutissage ou de pièces de peau pour bâtiments.

Dans le domaine de l'emboutissage, l'invention présente en outre spécifiquement les avantages suivants :

- réduction du coefficient de frottement dynamique de l'outil avec la tôle à emboutir ;
- formation d'une couche intermédiaire de surface résistante à l'usure,
- cette couche intermédiaire étant imperméable (très faible porosité à l'eau), cela permet d'éviter la pénétration d'agents agressifs dans la pièce.

Ces trois avantages concourent à l'amélioration de la durée de vie des outils lors de séries d'emboutissage.

De différentes analyses effectuées à la surface de pièces réalisées conformément à l'invention, on déduit que cette surface comprend généralement plusieurs couches superposées, soit, de la surface vers la profondeur :

- une première couche externe de très faible épaisseur, par exemple de l'ordre de 5 $\mu$m, constituée principalement de particules de fumées de silice agglomérées et de cristaux de portlandite, voire de calcite résultant de la carbonatation de la portlandite ; cette couche n'est pas très résistante à l'usure puisque les cristaux de portlandite et de calcite ont de faibles caractéristiques d'usure et puisque les particules de fumées de silice sont faiblement hydratées ; cette couche disparaît donc rapidement après quelques cycles d'emboutissage.
- Une deuxième couche dite intermédiaire d'épaisseur moyenne, par exemple comprise entre 70 et 100 $\mu$m, plus dense et beaucoup plus résistante que la première couche externe ; par rapport au béton plus en profondeur dans le volume de la pièce, cette couche est beaucoup plus imperméable aux liquides et donc moins poreuse, mécaniquement plus résistante notamment à l'usure, plus riche en pâte de ciment et donc plus pauvre en granulats, à cause de « l'effet de paroi » qui repousse les granulats de la paroi du moule.
- Une couche sous-jacente à la deuxième couche intermédiaire qui correspond au béton classique dans la profondeur dans la pièce.

Ainsi, alors que, dans les bétons ordinaires, l'effet de paroi de moule est défavorable vis à vis de l'état de surface puisqu'il augmente la porosité, favorise, en surface, la croissance de gros cristaux de portlandite orientés, peu résistants, perméables et sensibles à l'attaque des agents agressifs, à l'inverse, au sein de bétons comprenant de la poudre fine et réactive, notamment de la fumée de silice, et un agent tensio-actif, notamment un superplastifiant, l'effet de paroi permet au contraire et de manière surprenante, moyennant quelques précautions concernant notamment l'absence de produit de démoulage hydrophobe et la cure, de former au moins une couche « intermédiaire » de surface plus dense et plus résistante que le béton dans la profondeur et le volume de la pièce.

Grâce à l'utilisation conjointe d'un moule à surface apolaire, inerte et non réactive, dont l'énergie de surface est inférieure à 35 mJ/m$^2$, et d'une formulation de béton comprenant un agent tensio-actif mouillant vis à vis du moule et/ou un agent superplastifiant, d'une part le béton n'adhère pas au moule même s'il n'est pas enduit d'agent de démoulage, d'autre part on obtient une pièce en béton de surface lisse et sans bulles, voire d'aspect brillant et vitreux en présence d'agents superplastifiants ; des pièces en béton réalisées dans les mêmes moules mais à l'aide de formulations classiques de béton ne contenant pas de fumée de silice ni de superplastifiant présentent des états de surface beaucoup moins lisses, beaucoup plus poreux, et non brillants ; si, à lui seul, le caractère « non mouillant » et inerte de la surface du moule peut empêcher l'adhérence entre le moule et le béton et permet d'obtenir une surface lisse sans bulles voire brillante à condition de ne pas utiliser d'agent de démoulage hydrophobe, de vibrer le béton suffisamment fort et longtemps et d'adapter les conditions de cure, il est préférable, selon l'invention, d'ajouter à la formulation de béton un agent tensio-actif ou d'utiliser un agent superplastifiant qui est aussi tensio-actif, pour obtenir plus facilement un état de surface de meilleure qualité encore tout en limitant le temps et les moyens de vibration.

L'effet de l'agent tensio-actif ou de l'agent superplastifiant qui est aussi tensio-actif est très important sur l'aspect de surface des pièces de béton : les hydrates qui se forment pendant la prise du béton couvrent complètement la surface du moule et forment en grande partie la surface lisse, sans bulle, voire brillante de la pièce en béton.

De manière générale, les hydrates principaux qui se forment lors de l'hydratation du béton sont la portlandite, l'ettringite et les silicates de formule C-S-H (notation cimentaire); la portlandite, notamment, se développe à partir de sites de nucléation, dès lors que la concentration ionique en solution satisfait les critères requis ; ces sites de nucléation sont par exemple formés par des grains de liant hydratés et par des grains de poudre réactive, c'est à dire des grains de ciment hydratés et des grains de silice ; à l'inverse, comme la surface du moule présente un caractère « non-mouillant », elle ne peut, contrairement à la surface des moules généralement employés dans l'art antérieur, présenter de sites de nucléation des hydrates, en dehors des défauts de surface inévitables.

Comme une molécule d'agent tensio-actif présente généralement une terminaison hydrophile et autre une terminaison hydrophobe et/ou comme une molécule d'agent superplastifiant comprend souvent une longue chaîne moléculaire hydrophobe sur laquelle est greffée au moins une terminaison ionique, donc hydrophile, il semblerait que, dans le cas de l'invention, après coulage mais avant la prise du béton dans le moule, une couche monomoléculaire de cet agent se formerait à l'interface entre la paroi « inerte » ou « apolaire » du moule et le béton ; cette couche monomoléculaire présente alors des terminaisons hydrophobes tournées vers la paroi du moule et des terminaisons hydrophiles tournées en direction opposée dans l'épaisseur de la surface de la pièce en béton où elles modifient les conditions ioniques qui agissent sur la nucléation des hydrates ; cette couche moléculaire serait donc déterminante vis à vis de l'état de surface obtenu, lisse et sans bulles.

Cette couche moléculaire aurait trois effets principaux :

-   un premier effet de démoulage, puisqu'elle forme une interface entre les hydrates du béton et le moule et limite donc l'adhérence ;
-   un effet de débullage puisque ses propriétés tensioactives font chuter la tension superficielle de l'eau et modifient les domaines de stabilité des bulles d'air, qui deviennent plus stables en solution que plaquées contre les parois du moule apolaire ;
-   un effet attracteur puisque ses terminaisons hydrophiles se déploient dans la phase aqueuse du béton frais, polarisent la zone proche de la surface et créent des sites potentiels de nucléation pour les hydrates, qui précipitent à partir de ces sites, c'est à dire de cette couche, vers l'intérieur du moule et qui forment alors une couche dense en surface de la pièce.

Ainsi, les pièces moulées peuvent être décoffrées du moule sans application préalable d'un démoulant (effet démoulant), la surface de la pièce obtenue est très lisse et ne comporte pas de bulles en surface (effet débullant), et cette surface est dense et compacte (effet attracteur).

La poudre fine et réactive, ici la fumée de silice, est importante pour obtenir au moins la couche intermédiaire de surface des pièces selon l'invention et pour ses caractéristiques, notamment de compacité élevée ; en effet, cette poudre aurait tendance se placer au niveau de la surface de la pièce du fait des caractéristiques de l'invention portant sur la surface du moule et sur l'agent tensio-actif de la formulation ; on peut supposer que, lors du gâchage de la formulation et du coulage dans le moule, les ions Ca$^{2+}$ migrent vers la couche monomoléculaire de la surface du moule et la charge positivement, les particules de silice s'hydrolysent en surface en Si-O⁻ chargé négativement et migrent vers la surface du moule chargée positivement ; la densité importante de poudre réactive à la surface des pièces constitue alors une densité importante de sites de nucléation d'hydrates et entraîne la formation, en surface, d'un gel de silicate « C-S-H » dense, peu poreux, amorphe et ayant de bonnes propriétés mécaniques.

En récapitulant, sans vouloir se limiter à aucun schéma explicatif, on peut considérer que deux phénomènes physico-chimiques principaux seraient à l'origine de la nature et de l'état de surface obtenu par le procédé selon l'invention : l'utilisation d'un agent tensio-actif et/ou d'un agent superplastifiant dans la formulation de béton :

- permet d'abaisser la tension superficielle de l'eau de la formulation de béton, d'améliorer la mouillabilité du moule et d'éviter ainsi la formation de bulles d'air à la surface du moule, alors que la surface du moule présente pourtant une très mauvaise mouillabilité à l'eau pure,
- modifie les conditions de formation des hydrates à la surface de la pièce et permet d'obtenir une surface ayant de bonnes propriétés mécaniques.

Les exemples suivants illustrent l'invention :

Exemple 1 :

Cet exemple a pour but d'illustrer deux formulations de béton, l'une de type BHP, l'autre de type BTHP, utilisables pour la mise en oeuvre de l'invention et les propriétés mécaniques des pièces en béton qu'on peut obtenir avec ces formulations.

Pour ces formulations, les matériaux retenus sont donc :

- un granulat dolomitique ayant une compacité propre élevée ne nécessitant pas de compléter le squelette granulaire par des éléments fins tels que des fillers calcaires,
- un ciment finement broyé à haute teneur en silice, présentant une faible teneur en aluminate de calcium (formule C3A), dosé en fonction des résistances mécaniques visées, à savoir une résistance à la compression à 28 jours de l'ordre de 90 MPa pour la formulation « BHP » et 160 MPa pour la formulation « BTHP ».
- une fumée de silice à faible teneur en alcalins et à très faible teneur en carbone, dosée de manière à consommer toute la chaux et à être proche de l'optimum de compacité, c'est à dire entre 25 % et 30 % de la masse de ciment,
- un superplastifiant dosé légèrement au-delà de la « dose de saturation » déterminée par la « nouvelle méthode des coulis » précédemment citée ; on constate que de l'eau pure dosée de la même façon en superplastifiant présente une énergie de surface inférieure à 50 mJ/m$^2$.
- une quantité d'eau conduisant à un affaissement de 13 cm et un étalement de 30 cm à partir d'un mini-cône standard correspondant à un cône d'ABRAMS à l'échelle ½ (hauteur : 150 mm au lieu de 300 mm - diamètre à la base : 100 mm au lieu de 200 mm - diamètre au sommet : 50 mm au lieu de 100 mm).

Comme granulats, on utilise des granulats calcaires des carrières du Boulonnais de calibre 0/4 mm (CB 0/4 selon la norme française expérimentale XP P 18-540 publiée en octobre 1997) ; il s'agit de calcaires durs qui ont une résistance à l'abrasion proche de celle des pâtes de ciment à hautes performances et qui permettent donc d'assurer une usure homogène de la pièce en béton utilisée comme outil d'emboutissage ; les granulats utilisés présentent les caractéristiques suivantes :

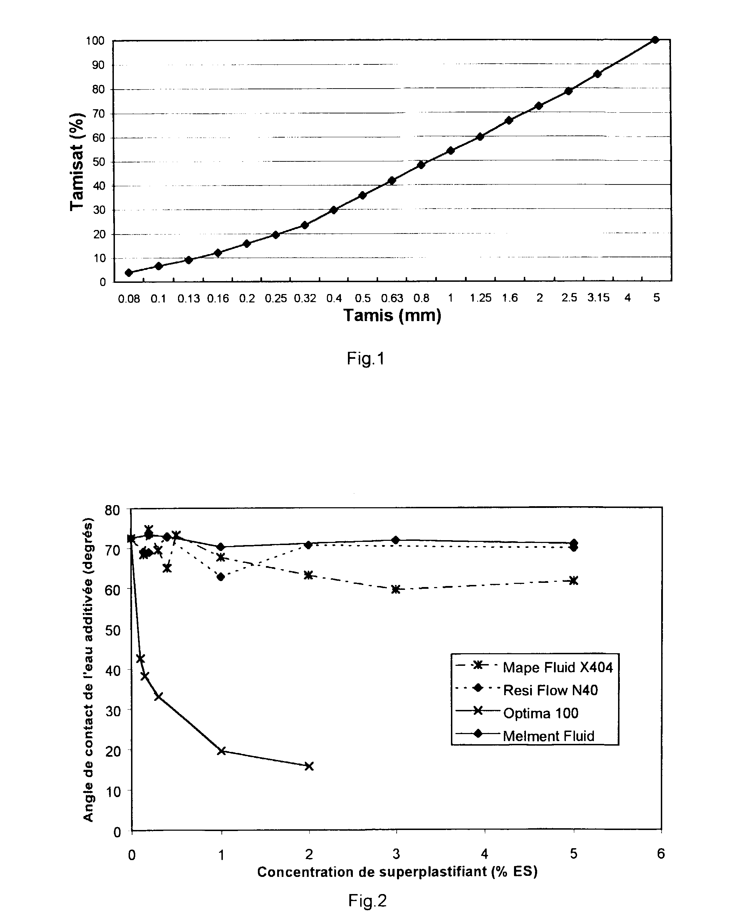

- masse volumique absolue, $\rho$ = 2660 kg/m$^3$,
- compacité propre, C = 0,786,
- courbe granulométrique représentée à la figure 1, avec, en abscisse, la maille du tamis (en mm) et, en ordonnée, la proportion pondérale (%) passant à travers le tamis.

Selon cette figure 1, on constate que la granulométrie de ce sable est très homogène et très étendue dans l'intervalle de tailles : inférieur à 0,08 mm (« fines» : 8% en poids) à supérieur à 4 mm (de l'ordre de 10% en poids).

L'utilisation de ce granulat référencé CB 0/4 est avantageuse car sa compacité est naturellement élevée et car la proportion importante de « fines » (taille inférieure à 0,08 mm), qui se comportent comme des « fillers » calcaires, permet d'améliorer les propriétés rhéologiques et mécaniques du béton.

L'utilisation de ce granulat référencé CB 0/4 nécessite cependant quelques précautions : comme sa granulométrie est étendue, il y a risque de ségrégation entre les particules fines et les gros grains, et des prélèvements normalisés sont nécessaires afin d'obtenir des échantillons représentatifs ; par ailleurs, afin de limiter les pertes en particules fines par envolement sous forme de poussières, il est préférable de manier ces granulats sous forme humidifiée.

Le Tableau I indique les proportions des constituants des deux formulations étudiées pour la mise en oeuvre de l'invention.

Tableau I -

| Formulation des bétons étudiés - | | |
|---|---|---|
| Formulation : Constituants (kg/m$^3$) : | BHP (kg/m$^3$) | BTHP (kg/m$^3$) |
| Ciment CPA-CEM I 52,5 PM ES (1) | 550 | 1080 |
| Fumée de Silice - Société SEPR | 138 | 334 |
| Granulats CB 0/4 | 1620 | 813 |
| Eau réelle | 179 | 172 |
| Superplastifiant : Optima 100 | 13,7 | 54,1 |
| Densité obtenue (kg/m$^3$) | 2500 | 2450 |

(1) selon la norme française NF P 15-301 publiée en 1994

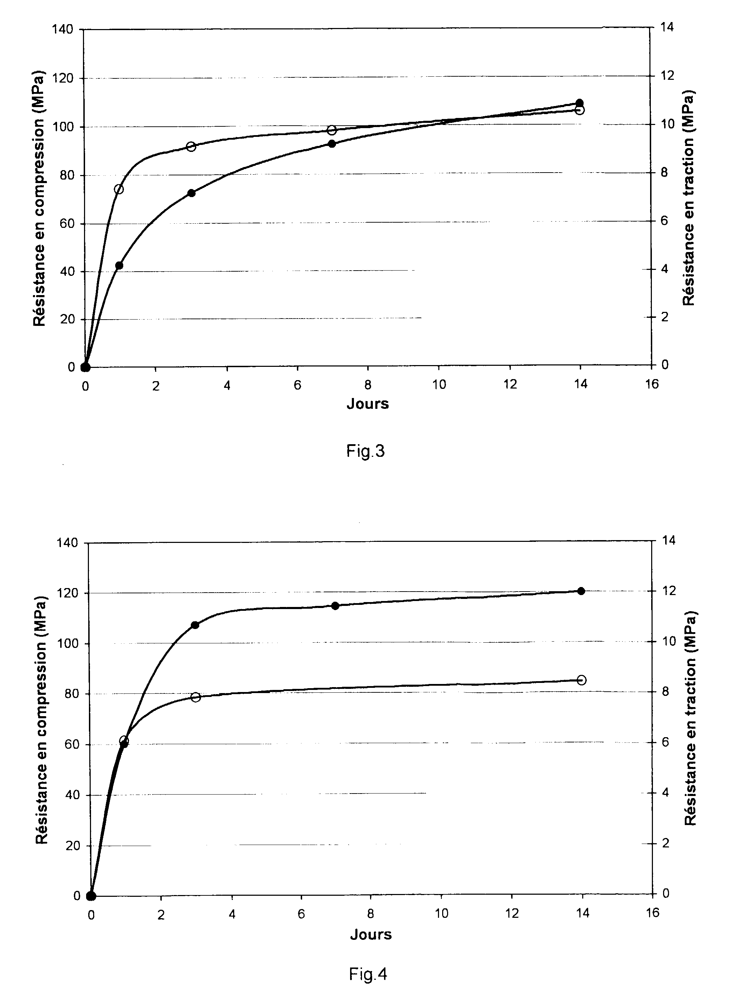

Des essais de caractérisation mécanique en traction par flexion et en compression ont été effectués pour ces deux formulations de bétons hydrauliques à partir d'éprouvettes prismatiques 4 x 4 x 16 cm ; ces essais ont été effectués à différentes périodes (jours) après coulage afin d'évaluer leur rapidité de prise ; une synthèse des résultats de ces essais est reportée à la figure 3 pour la formulation « BHP » et à la figure 4 pour la formulation « BTHP » : la résistance en compression (MPa) est représentée par des symboles ● par référence à l'échelle en ordonnée à gauche, alors que la résistance en traction (MPa) est représentée par des symboles o par référence à l'échelle en ordonnée à droite ; les essais en traction sont effectués en flexion « trois points » selon la norme EN 196-1 et les essais en compression sont effectués ensuite sur les demi-prismes provenant des essais en traction.

On remarque que les caractéristiques mécaniques à terme des deux formulations sont quasiment atteintes seulement 4 à 7 jours après coulage ; ces résultats montrent donc qu'il est possible de réduire de manière très importante le délai avant mise en charge de ces bétons par rapport aux bétons classiques pour lesquels cette période peut varier de deux à quatre semaines.

Pour la formulation « BHP », on obtient ainsi une résistance en compression de l'ordre de 110 MPa et une résistance en traction de l'ordre de 10,5 MPa, avec un rapport résistances en compression/traction de l'ordre de 10.

Pour la formulation « BTHP », la résistance en compression est supérieure à 120 MPa (limite supérieure de mesure de l'appareillage) et, par contre, la résistance en traction est plus faible, de l'ordre de 8,5 MPa, avec un rapport résistances en compression/traction supérieur à 14 ; par rapport à la formulation « BHP », le gain en compression semble donc être largement inférieur à la perte de résistance mesurée en traction.

Exemple 2 :

Cet exemple a pour but d'illustrer, pour la formulation de béton « BHP » de l'exemple 1, l'incidence de la nature des parois du moule et de la cure du béton sur l'état des surfaces correspondantes des pièces en béton préparées dans ce moule.

Concernant l'importance de la cure, on a constaté, en partant de la même formulation et du même moule :

- qu'au bout de 2 jours, la pièce décoffrée présentait une surface mate et rugueuse, pourtant sèche.
- qu'au bout de 3 jours, la pièce décoffrée présentait une surface lisse, brillante et sans bulle.

Pour d'autres moules (moules peints), il n'était même pas toujours possible de démouler au bout de 3 jours et il a fallu jusqu'à 4 jours de cure pour obtenir la surface lisse, brillante et sans bulle.

Ce résultat montre que la cure doit être suffisamment longue et suffisamment humide pour obtenir l'état de surface poursuivi par l'invention.

Concernant l'importance de la nature des parois du moule, différents tests de moulage ont donc été effectués dans des moules réalisés dans différents matériaux plastiques et dans des moules dont les parois de moulage ont été couvertes de différents peintures ; les résultats obtenus, en terme d'état de surface du béton décoffré après 3 jours de cure, sont reportés dans les tableaux II (matériau plastique) et III (peintures) ci-dessous ; la colonne 3 donne une estimation chiffrée de l'état de surface obtenu : 0 : très mauvais- 1: moyen - 2 : bon - 3 : très bon.

Lors des essais effectués dans des moules usinés dans les matériaux du tableau II ci-après, on a observé un effet important de la qualité d'usinage des parois internes de ces moules sur l'état de surface obtenu : par exemple, si la paroi comporte des stries d'usinage, des bulles apparaissent sur la surface correspondant à ces stries ; il est donc important d'avoir un moule le plus lisse possible afin d'obtenir un bon état de surface du béton.

Les divers matériaux apolaires figurant au Tableau II présentent une faible tension superficielle et sont inertes et non réactifs vis à vis des composants du béton ; les matériaux à base de polychlorure de vinyle ou de polyoléfines comme le polypropylène ou le polyéthylène, ou de polyamide présentent une énergie de surface inférieure à 35 mJ/$\ell$, conformément à l'invention, et, pour ces matériaux, les résultats obtenus en termes d'état de surface sont particulièrement bons.

Tableau II -

| État de surface de pièce selon matériau de moulage. | | |
|---|---|---|
| matériau de moule | état de surface du béton | |
| Époxy SV410 et durcisseur HY 2404 (Araldite™) | quelques points d'ancrages forts, nombreuses micro-liaisons, surface mate et rugueuse, non lisse. | 1 |
| POM/C (polyoxyméthylène) | légère adhérence par de multiples petits points, surface poreuse et mate (légèrement rugueuse) | 1 |
| PPH (polypropylène) | surface lisse et légèrement brillante, quelques bulles sur les côtés, nombreuses bulles sur le fond | 2 |
| PVC (polychlorure de vinyle) | surface sans bulles, apparence sèche et mate avec des zones plus ou moins rugueuses. | 2 |
| PETP (polytéréphtalate d'éthylène) | équivalent au PVC, avec quelques bulles sur le fond | 2 |
| PEHD 500 (polyéthylène) | surface lisse et brillante, aucune bulle sur les parois latérales, quelques bulles sur le fond. | 2 |
| PA6 (polyamide 6, Nylon™) | état de surface équivalent au PP H gris sur les cotés et sur le fond du moule. | 2 |
| polycarbonate (Lexan™) | État de surface correct, malgré la présence de quelques bulles | 1 |

L'autre tableau III ci-après met d'abord en évidence qu'une surface polaire et mouillante ne permet pas d'atteindre l'état de surface poursuivi : voir résultat correspondant au revêtement qualifié de « polaire ».

Toutes les autres peintures testées (hormis la peinture au chrome) sont inertes et non réactives vis à vis des composants du béton et présentent une énergie de surface inférieure à 35 mJ/m$^2$ : on observe alors toujours un bon ou très bon état de surface du béton, lisse, sans bulles ni défaut.

Tableau III -

| État de surface en fonction de la nature de la surface du moule. | | |
|---|---|---|
| peinture utilisée | état de surface du béton | |
| Époxy, blanc et brillante | la peinture adhère plus fort au béton qu'au moule - après enlèvement de la peinture, la surface obtenue est lisse et brillante | 1-2 |
| Peinture brillante chromée, très polaire. | très forte adhérence entre la peinture et le béton. | 0 |
| Résine acrylique, translucide et brillante | décoffrage difficile (adhérence), mais la surface est lisse, sans bulles et brillante | 2 |
| Peinture acrylique polymérisée à chaud (tôle prépeinte) | aucun défaut de surface, surface lisse et brillante, décoffrage aisé. | 3 |

De manière générale, on constate donc qu'on obtient des pièces en béton dont la surface est lisse et sans bulles, voire brillante :

- en utilisant les formulations de béton de l'exemple 1 qui contiennent un agent tensio-actif superplastifiant conférant une énergie de surface inférieure à 50 mJ/m$^2$,
- en utilisant, pour couler ce béton, des moules dont les parois sont apolaires, très peu mouillantes vis à vis de l'eau, inertes et non réactives vis à vis des composants du béton, et présentent une énergie de surface inférieure à 35 mJ/m$^2$,

- en adoptant des conditions de cure suffisamment longues et humides, qui correspondent à des conditions de cure classiquement favorables aux réactions pouzzolaniques.

Pour bénéficier pleinement de l'effet technique poursuivi par l'invention, il convient cependant :

- d'utiliser des moules dont les parois de moulage sont lisses, propres et sans défauts,
- d'assurer une densification optimale du béton au coulage, notamment par vibrage.

Exemple 3 :

Cet exemple a pour but d'illustrer l'incidence des propriétés tensio-actives de l'adjuvant ajouté, selon l'invention, à des formulations de béton sur la qualité de surface des pièces en béton obtenues.

Afin de mesurer les propriétés tensioactives de différents agents superplastifiants, des mesures de mouillabilité des mélanges eau-superplastifiant ont été réalisées ; par définition, l'effet tensioactif d'un agent réside dans l'abaissement de l'énergie de surface du liquide auquel il est mélangé : ainsi, un effet tensio-actif significatif conforme à l'invention correspond par exemple à un abaissement à moins de 50 mJ/m$^2$ de l'eau additionnée de ce agent si l'énergie de surface du l'eau pure est de 72 mJ/m$^2$.

La tension superficielle d'eau convenablement additionnée d'agent tensio-actif devient alors peu différente de la tension entre cette eau et l'air.

Appliquée à une substrat donné, cette diminution de l'énergie de surface de l'eau correspond à une diminution de l'angle de mouillage de l'eau vis à vis vis à vis d'un substrat peu mouillant, comme l'illustrent les mesures ci-après.

Quatre types de superplastifiants ont donc été étudiés ici ; il s'agit de deux superplastifiants anioniques, un polynaphtalène sulfoné et un polymélamine sulfoné, et deux superplastifiants stériques, un polyacrylate et un phosphonate modifié ; leurs caractéristiques sont reportées au tableau IV.

Tableau IV -

| Caractéristiques de différents superplastifiants (BHP ou BTHP). | | | | | |
|---|---|---|---|---|---|
| superplastifiant | fabricant | nature | E.S. (1) | pH | densité |
| Resi Flow N40 | CIA | polynaphtalène sulfoné | 40 % | 7,5 | 1,2 |
| Mapefluid X404 | Mapeï | polyacrylate | 40% | | 1,08 |
| Melment Fluid | CIA | polymélamine sulfoné | 20 % | 11 | 1,11 |
| Chrysofluid Optima 100 | Chryso | phosphonate modifié | 30 % | 4 | 1,06 |

(1) E.S. : Extrait Sec

Des mesures de mouillabilité ont été effectuées en mesurant l'angle de contact de l'eau additivée de superplastifiant à diverses concentrations sur une surface peu mouillante conforme à l'invention présentant une énergie de surface inférieure à 35 mJ/m$^2$ : le substrat utilisé pour ces mesures est une tôle prépeinte PVDF dont l'énergie de surface est de 32 mJ/m$^2$.

Dans ces conditions, l'angle de contact de l'eau pure non additivée sur le substrat est de 72,5 ± 1,2 degrés.

Les autres résultats (angle en degré) sont reportés sur la figure 2 en fonction de la concentration (%) de superplastifiant dans l'eau.

En ce qui concerne le Melment Fluid, son addition dans l'eau ne semble n'avoir aucun effet mesurable sur l'angle de contact et sur la tension de surface et on observera aucun effet de cet adjuvant sur les propopriétés de surface des pièces en béton obtenues ; à l'inverse, l'addition du superplastifiant Optima 100 permet d'augmenter de manière très importante le mouillage du substrat et on peut espérer atteindre un mouillage total pour une concentration de l'ordre de 5 % par rapport à la quantité d'eau ; le Mape Fluid X 404 présente un léger effet mouillant, ainsi que le Resi Flow N40 à 1% de concentration ; avec l'Optima 100, dans une moindre mesure avec le Mape Fluid X 404 et le Resi Flow N40, il est donc possible d'obtenir un angle de mouillage inférieur ou égal à 65° sur une surface correspondant à une paroi de moule.

On va maintenant étudier l'incidence des propriétés tensio-actives des agents superplastifiants sur la qualité de surface des pièces en béton obtenues à partir de formulations de béton « BHP » de l'exemple 1 contenant l'un ou l'autre de ces agents superplastifiants.

On va également étudier l'incidence de l'utilisation d'un produit de décoffrage hydrophobe, donc huileux, sur la qualité de surface de ces pièces.

On utilise un moule de forme simple en polyéthylène, donc non réactif et fortement hydrophobe, présentant une énergie de surface inférieure à 35 mJ/m$^2$.

Pour chaque composition de béton, deux éprouvettes ont été réalisées : une éprouvette coulée dans le moule sans aucun produit de surface et une éprouvette dans le même moule, préalablement recouvert d'une huile de décoffrage classique (Société SIKA).

Les dosages en extraits secs des différents superplastifiants sont identiques pour toutes les compositions, soit 1 % en extraits secs ; les bétons ont été confectionnés dans un malaxeur de 1 litre en suivant toujours le même protocole ; les moules ont été vibrés 30 secondes sur table vibrante, fréquence 50 Hz et amplitude 1 mm.

Les éprouvettes moulées ont été conservées dans le moule durant 3 jours à l'air libre, entourées d'un film plastique, l'ensemble étant disposé dans un sac étanche.

Tableau V -

| État de surface selon superplastifiant et produit de décoffrage. | | |
| --- | --- | --- |
| Etats de surface observés : selon superplastifiant : | Sans produit de décoffrage | Avec produit de décoffrage |
| RésiFlow N40 | Pas de bulle en surface Aspect lisse et brillant | Réseau de bulles très dense $\varnothing$maxi = 2 mm 1 mm< $\varnothing$ <2 mm : 25/100 cm$^2$ 0,5 mm< $\varnothing$ <1 mm : 2 / 1 cm$^2$ $\varnothing$ <0,5 mm : 20 / 1 cm$^2$ |
| X404 | Quelques bulles sur une partie de la surface Aspect lisse et brillant | Réseau de bulles très dense $\varnothing$maxi = 0,3 mm $\varnothing$ <0,3 mm : 50 /1 cm$^2$ |
| Optima 100 | Pas de bulle en surface Aspect lisse et brillant | Réseau de bulles très dense $\varnothing$maxi = 0,5 mm $\varnothing$ <0,5 mm 1 15 /1 cm$^2$ |

Comme indiqué au Tableau V ci-dessus, pour toutes les compositions de béton utilisées, les états de surface observés sont complètement différents selon qu'on a utilisé ou non un produit de décoffrage ;

- les éprouvettes coulées dans le moule plastique recouvert d'huile de décoffrage présentent toutes un bullage de surface ; toutefois le réseau et le diamètre des bulles sont fonction de la nature du superplastifiant.
- toutes les éprouvettes réalisées dans le moule sans aucun produit de surface conformément à l'invention présentent toutes une surface lisse et brillante, quasiment sans aucune bulle.

On déduit de ces essais que la présence d'un produit de démoulage à la surface du moule introduit, à l'interface moule-béton, une concurrence entre les molécules de produit de décoffrage qui sont hydrophobes et les molécules de superplastifiant qui sont amphotères hydrophiles/hydrophobes ; le produit de décoffrage n'a pas tendance à repousser les bulles d'air de la surface, car ses molécules enrobent les bulles d'air de la même manière que les terminaisons hydrophobes des superplastifiants ; toutefois, à l'inverse des superplastifiants, comme toute la molécule du produit de décoffrage est hydrophobe, la bulle entourée de cette molécule aura tendance à rejoindre des zones hydrophobes, notamment la paroi du moule, pour former des bulles sur la surface de la pièce en béton.

On en déduit qu'il ne faut pas utiliser de produit de décoffrage purement hydrophobe si l'on souhaite obtenir une surface lisse, brillante et quasiment dépourvue de bulles.

On en déduit également que l'utilisation d'un moule de décoffrage aux parois fortement inertes et hydrophobes permet d'obtenir un aspect de surface lisse, brillant et sans bullage et ce, quelque soit le pouvoir tensio-actif du superplastifiant, du moins dans le cas de moules présentant des formes simples.

On a constaté par d'autres essais que, dans le cas de moules de grande taille et/ou possédant des formes complexes, le pouvoir tensio-actif du superplastifiant avait au contraire un effet important sur l'état de surface de la pièce en béton ; dans ce cas, toujours en utilisant un moule de surface apolaire non réactive et en procédant à une cure favorisant les réactions pouzzolaniques, on a constaté que l'obtention d'une surface lisse, sans bulle et brillante nécessitait une densification par vibration d'autant moins importante et difficile au moment du coulage que les propriétés tensio-actives de l'agent superplastifiant utilisé sont élevées et permettent d'aboutir, additionnés à de l'eau pure, à une énergie de surface inférieure à 50 mJ/m$^2$.

Ainsi, il devient indispensable d'utiliser les propriétés tensioactives des adjuvants du béton si l'on souhaite limiter les risques de bullage ; ainsi, l'invention permet de raccourcir l'étape de vibration après coulage et d'éviter une densification trop laborieuse.

Exemple 4 :

Cet exemple a pour but d'illustrer les propriétés mécaniques de la surface caractéristique des pièces en béton obtenues selon l'invention, notamment en vue d'utiliser ces pièces comme outil d'emboutissage.

Du point de vue mécanique, les grandeurs à considérer sont les coefficients de frottement statique et dynamique, la vitesse d'usure, la dureté et le module de surface.

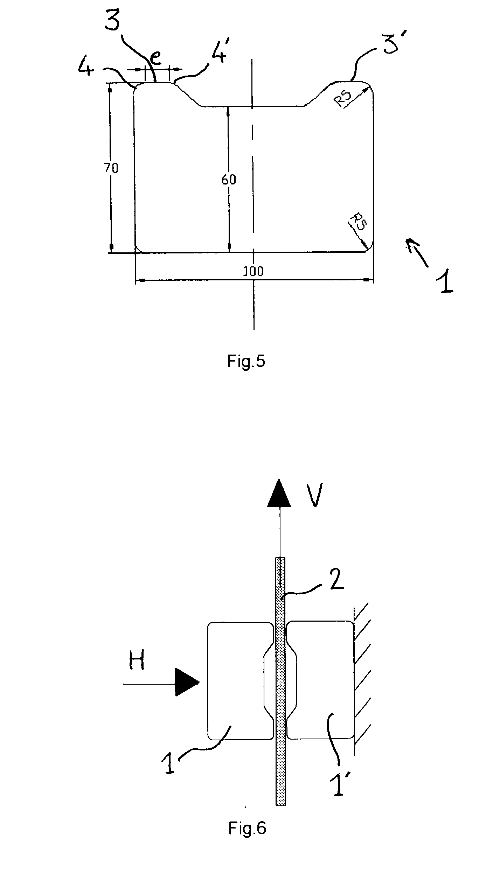

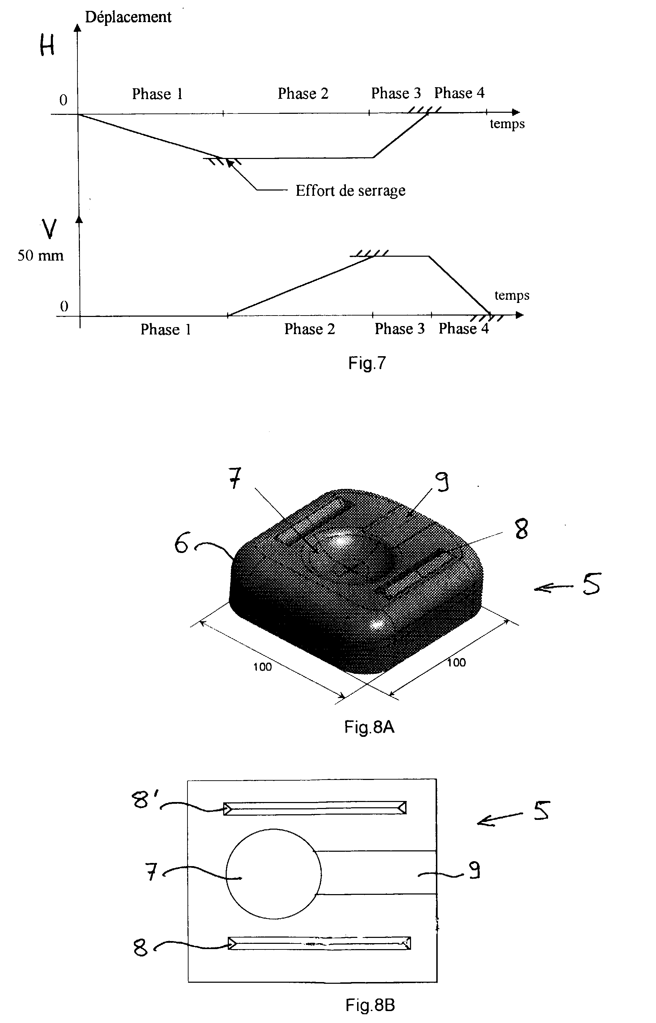

On prépare des éprouvettes en béton 1 ayant la forme représentée en vue de côté à la figure 5 ; on mesure le coefficient et la vitesse d'usure à l'aide du dispositif représenté schématiquement à la figure 6, en faisant frotter une tôle d'acier 2 entre deux éprouvettes 1, 1' ; ce dispositif comprend un vérin de déplacement vertical V pour déplacer la tôle et un vérin de déplacement horizontal H pour serrer la tôle ; pour ces mesures, on pratique une succession de cycles de frottement ; chaque cycle est décomposé entre 4 phases (phase 1 à phase 4) représentées à la figure 7, enchaînant des déplacements du vérin horizontal H jusqu'à assurer l'effort de serrage prédéterminé (palier inférieur de la partie haute du diagramme) et des déplacements du vérin vertical V (partie basse du diagramme) pendant l'effort de serrage.

Le frottement s'effectue sur quatre surfaces de contact : surfaces 3, 3' pour l'éprouvette 1 ; l'aire d'une surface de contact 3 correspond à la dimension e multipliée par la largeur de l'éprouvette (perpendiculairement au plan des figures 5 et 6).

Comme représenté aux figures 5 et 6, il est important que les angles de raccordement de ces surfaces de contact avec les autres faces de l'éprouvette soient arrondis : par exemple, angles 4,4' pour la surface 3 ; si ces angles ne sont pas arrondis, l'érosion rapide des angles engendre la formation de nombreux débris qui adhère à la tôle 2, tout particulièrement lors de l'utilisation de lubrifiants : l'évacuation de ces débris est difficile et l'usure mesurée n'est alors plus représentative des conditions réelles d'emboutissage

A l'aide de la formulation « BTHP » de l'exemple 1, dans un moule en tôle, on prépare donc des éprouvettes de frottement avec deux types d'état de surface : des éprouvettes « BTHP_AH» présentant un état de surface de frottement "classique" obtenu par l'application classique, sur la surface du moule, d'une huile de décoffrage, et des éprouvettes « BTHP_SH» avec un état de surface de frottement lisse et brillant, obtenu en recouvrant le moule métallique d'une peinture blanche hydrophobe et non réactive ; après coulage, les éprouvettes sont maintenues 3 jours dans le moule recouvert d'un film plastique pour maintenir le béton dans des conditions d'humidité favorables à l'obtention de l'état de surface lisse et brillant selon l'invention.

Les éprouvettes sont testées à l'âge de 10 jours selon les conditions du Tableau VI.

Tableau VI -

| Conditions des essais de frottement selon fig.6. | |
| --- | --- |
| Effort appliqué | 14 kN |
| Contrainte | 10 MPa |
| Course vérin vertical | 60 mm |
| Vitesse de frottement | 20 mm/s |
| Changement de tôle | tous les 10 cycles |

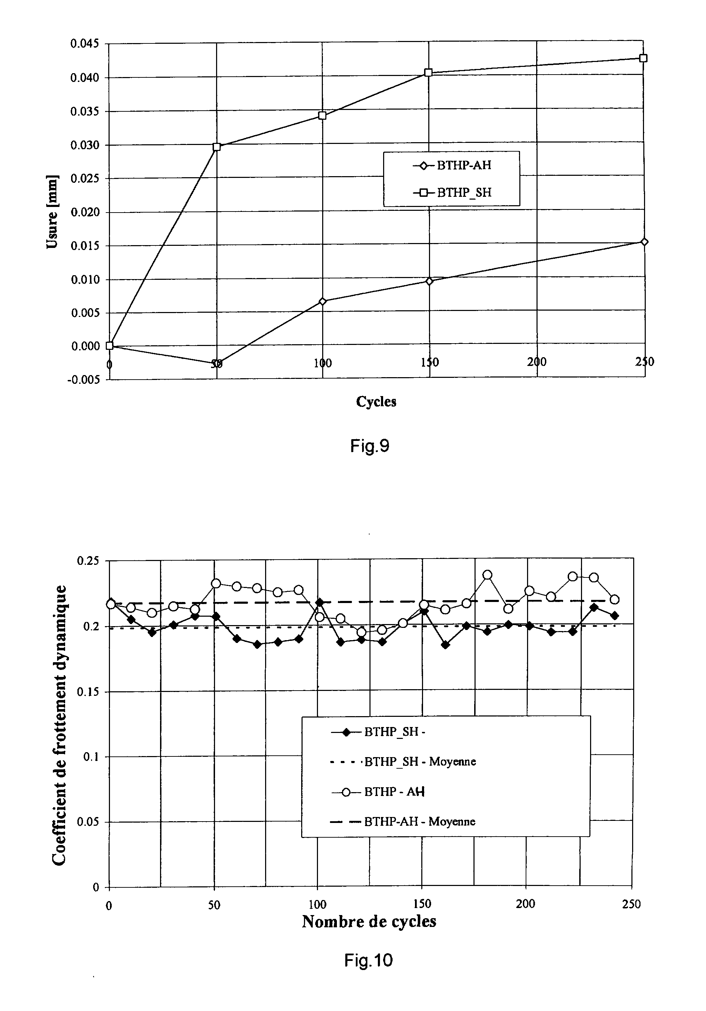

Les résultats obtenus sont reportés aux figures 9 et 10.

La figure 9 indique l'évolution de l'usure de l'éprouvette (mm de profondeur) en fonction du nombre de cycles d'emboutissage, jusqu'à 250 cycles ; les symboles □ désignent les résultats concernant les éprouvettes « BTHP_SH » et les symboles ◊ désignent les résultats concernant les éprouvettes « BTHP_AH ».

La figure 10 indique l'évolution du coefficient de frottement dynamique (sans unité) des éprouvettes en fonction du nombre de cycles d'emboutissage, jusqu'à 250 cycles ; les symboles ♦ et la ligne moyenne tracée pointillés à petits traits - - - -désignent les résultats concernant les éprouvettes « BTHP_SH » selon l'invention, et les symboles o et la ligne moyenne tracée pointillés à grands traits _ _ _ _ désignent les résultats concernant les éprouvettes « BTHP_AH ».

En se référant à la figure 9, ces résultats montrent que le profil d'usure des éprouvettes dépend fortement de l'état de surface des éprouvettes et illustre ainsi un effet important de l'invention.

Pour les éprouvettes « BTHP_AH» de l'art antérieur, on observe la formation d'une patine à la surface des éprouvettes ; selon des observations réalisées au microscope électronique à balayage, cette patine serait un mélange de poussières de béton, d'huile de protection et de particules métalliques de la tôle ; sa formation lors des premiers cycles expliquerait le « gonflement » de la pièce illustré à la figure 9 par le résultat du 50<sup>ème</sup> cycle et par la courbe en pointillés précédant ce point ; la vitesse d'usure est ensuite élevée jusqu'à 100 cycles, puis se stabilise à un niveau plus faible de l'ordre de 0,05 µm/cycle jusqu'à 250 cycles.

Pour les éprouvettes « BTHP_SH» selon l'invention, dont la surface de frottement est lisse, on n'observe pas ou très peu de formation de patine, mais l'usure est très rapide lors des 50 premiers cycles (résultat au 50<sup>ème</sup> cycle et courbe en pointillés précédant ce point), puis se stabilise dans les 100 cycles suivants au niveau de 1 µm/cycle environ, puis diminue encore au niveau de 0,025 µm jusqu'à 250 cycles ; l'usure très rapide lors des 50 premiers cycles montre que la surface des éprouvettes comporte une couche externe d'une épaisseur inférieure à 50 µm, ayant de médiocres caractéristiques mécaniques.

Ainsi, on constate que la surface lisse d'une pièce en béton selon l'invention, même si elle s'use très rapidement en période de « rodage » lors des premiers cycles d'emboutissage, résiste ensuite deux fois mieux à l'usure que la surface d'une pièce en béton classique de l'art antérieur (0,025 µm/cycle à comparer à 0,05 µm/cycle).

En se référant à la figure 10, on constate que le coefficient de frottement dynamique moyen calculé sur les 250 premiers cycles diffère entre les deux états de surface des deux types d'éprouvettes : 0,198 pour la surface lisse de « BTHP_SH» et de 0,217 pour la surface "classique" de « BTHP_AH », pour lequel la présence d'une patine ne semble pas diminuer le coefficient, mais au contraire l'augmenter, ce qui indiquerait que cette patine a un effet abrasif à l'interface éprouvette-tôle ; ainsi, on constate que la surface lisse d'une pièce en béton selon l'invention, frotte moins contre la tôle à emboutir que la surface d'une pièce en béton classique de l'art antérieur.

Pour l'évaluation de la dureté et du module de surface, on utilise une méthode appelée ROCHART (ROCk HARdness Test en langue anglaise), basée sur un test de pénétration d'un poinçon standard dans la surface à évaluer, qui a été mis au point à l'École française des Mines d'Alès et qui présente l'avantage de permettre d'accéder à différentes caractéristiques mécaniques des matériaux par un seul essai de type non destructif.

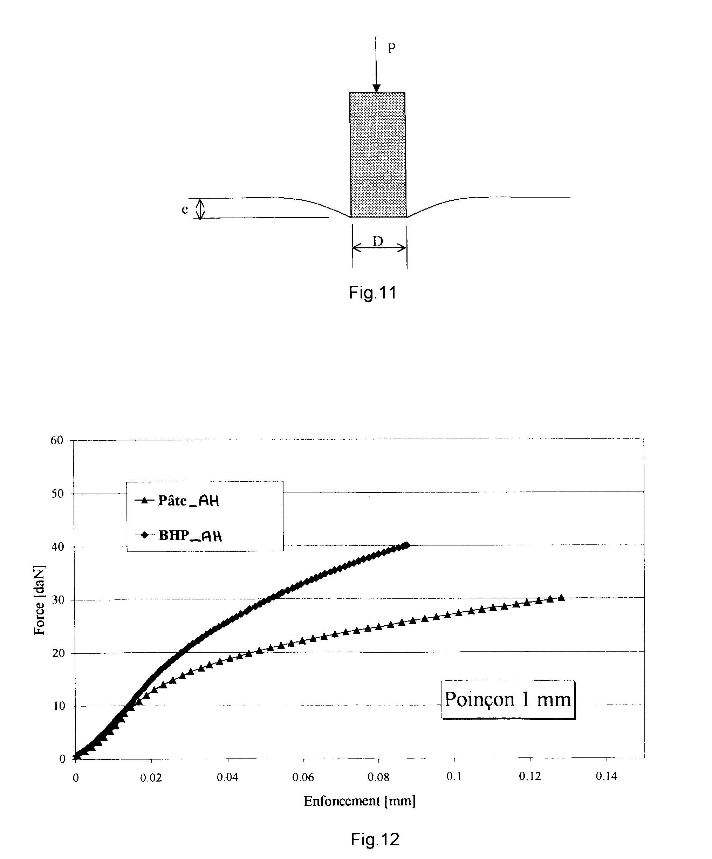

Comme illustré à la figure 11, le principe de cet essai consiste à enfoncer un poinçon plat, de diamètre D, dans le matériau à tester et à enregistrer en continu la courbe de la charge P ou de la contrainte

$$\sigma = \frac{P}{\pi\frac{D^2}{4}}$$

en fonction de l'enfoncement e du poinçon dans la surface.

Pour ces tests, on utilise des pièces en béton, en forme de cube de 2 cm de côté, préparées à partir de la formulation « BHP » de l'exemple 1 et des pièces en « pâte » de béton préparées à partir de la même formulation sans granulats, afin de pouvoir évaluer séparément les propriétés mécaniques de la « pâte de ciment » et celle de la même pâte dotée d'agrégats, c'est à dire le béton « BHP ».

Comme pour les tests d'usure, on prépare des éprouvettes avec deux types d'état de surface : des éprouvettes « BHP_AH » et « Pâte-AH » présentant un état de surface "classique" obtenu par l'application classique, sur la surface du moule, d'une huile de décoffrage, et des éprouvettes « BTHP_SH» et « Pâte_SH» avec un état de surface lisse et brillant, obtenu en coulant le béton ou la pâte dans un moule de polypropylène de surface apolaire et non réactive ; après coulage, les éprouvettes sont maintenues en cure pendant 3 jours dans le moule recouvert d'un film plastique, pour maintenir les éprouvettes dans des conditions d'humidité favorables à l'obtention de l'état de surface lisse et brillant selon l'invention.

La surface des échantillons n'est pas huilée avant les tests.

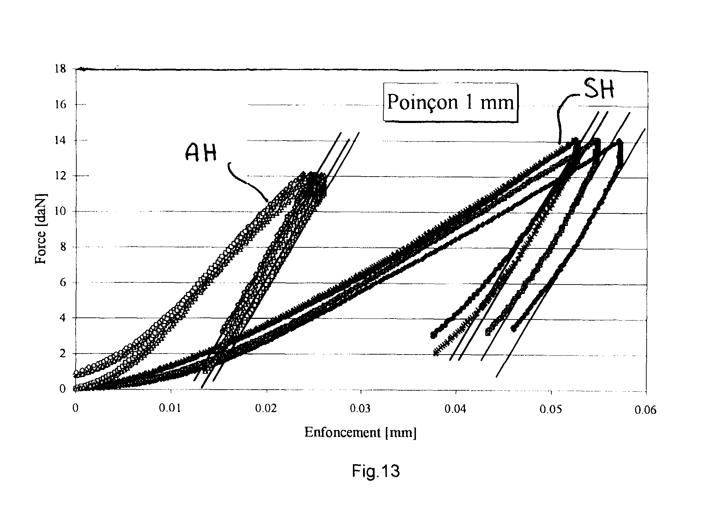

Les résultais obtenus sont reportés aux figures 12 et 13, sur lesquelles on a porté en ordonnée la force de pénétration (daN) et en abscisse l'enfoncement (mm) d'un poinçon standard de 1 mm de diamètre sous cette force.

Sur la figure 12, les symboles ▲ désignent les résultats concernant l'éprouvette « Pâte_AH» et les symboles ♦ désignent les résultats concernant l'éprouvette « BHP_AH », pour des tests effectués sous une force ou charge suffisamment élevées pour atteindre la zone de comportement plastique du matériau.

Sur la figure 13 représentant un grand nombre de résultats, l'ensemble des courbes désignées par AH représente les résultats concernant les éprouvettes « Pâte_AH» (ces courbes sont comparables à la courbe symbolisée par ▲ de la figure 12) et l'ensemble des courbes désignées par SH représente les résultats concernant l'éprouvette « Pâte_SH » ; lors de ces tests, un déchargement a été effectué avant d'atteindre le domaine plastique, afin de pouvoir comparer la raideur de la surface de l'éprouvette selon l'invention « Pâte_SH» et celle de la surface de l'éprouvette selon l'art antérieur « Pâte_AH »

En se référant à la figure 12, on constate que, pour la pâte comme pour le BHP, les courbes présentent trois zones bien distinctes : une première zone de mise en contact entre le poinçon et la surface du matériau, une deuxième zone linéaire, suivie d'une troisième zone plastique.

On constate également que, pour la pâte, la phase de plastification débute plus tôt que pour le BHP : on en déduit que c'est uniquement la pâte qui fixe la raideur initiale du matériau et qu'il faut solliciter une zone importante du matériau pour mobiliser les granulats ; ceci serait dû à l'effet de paroi qui entraîne une concentration moins forte de granulats au niveau de la surface ; on constate que cette mobilisation des granulats permet d'étendre la zone élastique linéaire et augmente la raideur du matériau dans la zone plastique.

En se référant à la figure 13, on constate qu'il y a une nette différence de comportements entre les deux états de surface dans la phase de chargement (courbe croissante) alors qu'ils semblent identiques dans la phase de déchargement ; pour tous les essais effectués, en phase de chargement, la raideur des échantillons coulés dans un moule huilé « Pâte_AH» est plus élevée que celle mesurée sur les échantillons à surfaces lisses « Pâte_SH» selon l'invention.

Lors de cette phase de chargement, on mesure la superposition de deux effets, celui de la plastification d'une éventuelle couche externe de surface et celui de la réponse élastique de la couche interne sous-jacente ; à l'inverse, lors du déchargement, même en présence d'une couche externe moins raide voire plastique, on ne mesure plus que le retour élastique de la couche la plus raide, c'est à dire de la couche interne sous-jacente,

La différence notable de comportement dans la phase de chargement permet ainsi de mettre en évidence la présence d'une couche moins résistante au niveau de la surface lisse des pièces selon l'invention.

Exemple 5 :

Cet exemple a pour but d'illustrer l'utilisation de pièces en béton selon l'invention dans des conditions réelles d'emboutissage.

En utilisant les compositions « BHP » et « BTHP » de l'exemple 1, on prépare quatre poinçons en béton 5 ; comme représenté en vue en perspective de dessus à la figure 8A et schématisé en vue de dessus à la figure 8B, chaque poinçon 5, de dimensions externes 100 x 100 mm, comporte des bords arrondis 6, un contre-embouti 7 à peu près au centre du poinçon, deux lignes de marquage 8, 8' de part et d'autre du contre-embouti, et un soyage 9.

Pour le coulage des poinçons dans le moule, on procède en deux temps : on coule dans un premier temps uniquement la surface travaillante de l'outil, soit une couche de 1 cm d'épaisseur environ, puis l'on vibre cette première couche pour densifier le béton, ce qui permet de raccourcir la distance entre les bulles et la surface et permet d'évacuer une quantité plus importante de bulles ; on coule et l'on vibre ensuite le reste du béton dans le moule.

On constate qu'on obtient une surface lisse et sans bulle avec les compositions de béton selon l'invention même sans vibrer très longtemps la première couche coulée, ce qui facilite la fabrication des pièces d'emboutissage.

La machine d'emboutissage utilisée est une machine classique dotée d'une matrice en fonte ; l'essai consiste à réaliser une succession de cycles d'emboutissage de tôle d'acier ; les tôles utilisées présentent une surface huileuse provenant d'un traitement de protection temporaire ; on ne rajoute pas d'huile ni de lubrifiant pour effectuer les essais.

A l'aide de chacun des deux poinçons « BHP » et des deux poinçons « TBHP », on a pu réaliser plus de 1200 pièces en tôle d'acier ; on constate que la tenue à l'usure des poinçons « TBHP » est supérieure à celle des poinçons « BHP », comme l'indique le nombre de premières pièces présentant un état de surface satisfaisant : 750 dans le cas « TBHP », 150 dans le cas « BHP ».

Exemple 6 :

Cet exemple a pour but d'illustrer la nature, la morphologie, la structure et la composition de la surface des pièces en béton selon l'invention.

A partir d'observations de cette surface au microscope électronique à balayage, on confirme que la microstructure de la zone de surface est différente de celle en volume ; trois zones ou strates bien distinctes ont pu être mises en évidence sur les surfaces observées, conformes à l'invention : une première couche de 10 μm d'épaisseur constituée en grande partie de fumée de silice et de quelques petits grains de clinker, une deuxième zone de 10 pm à environ 100 μm qui semble plus compacte que dans le volume, la troisième zone caractérisant le matériau dans le volume de la pièce en béton et commençant au-delà de 100 pm de profondeur par rapport à la surface.

Afin de confirmer la présence importante de fumée de silice au niveau de la surface, une petite quantité de pâte de formulation « BHP » de l'exemple 1 a été coulée sur un film plastique apolaire ; puis, 7h30 après le gâchage donc bien avant le début de prise, le film a été arraché de la pâte, de manière à entraîner une fine couche superficielle de pâte ; ce film doté de cette couche a été conservé dans un dessiccateur ; l'observation de cette couche d'une épaisseur de seulement quelques micromètres montre qu'elle est principalement formée de particules de fumée de silice agglomérées, ce qui confirme la présence importante de fumée de silice au niveau de la couche externe des pièces en béton selon l'invention.

A partir d'analyses de la surface par spectrométrie à dispersion d'énergie (« EDS »), on peut déterminer la composition élémentaire des hydrates de cette surface et notamment l'évolution ou le profil de concentration (%) de certains oxydes en fonction de la profondeur ($\mu$m) par rapport à la surface ; plus précisément, l'analyse « EDS » donne la concentration des différents éléments à partir de laquelle on calcule la concentration en oxyde de ces éléments en faisant l'hypothèse que tous les éléments sont présents sous forme oxydée.

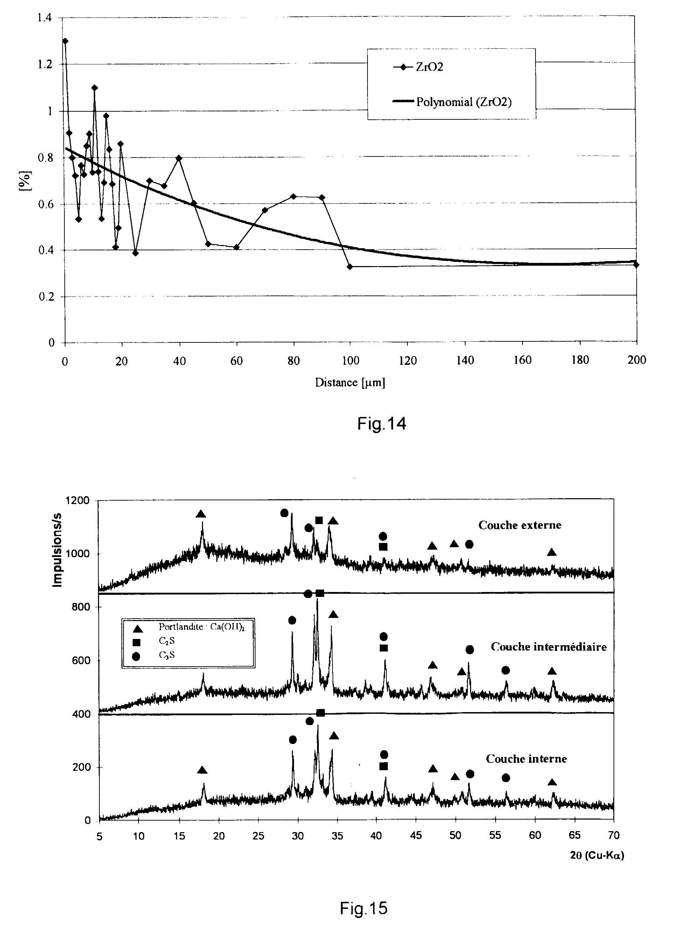

La figure 14 illustre le profil de concentration de $ZrO_2$ ; ce profil est intéressant puisque le zirconium présent dans la pâte du béton provient exclusivement de la fumée de silice ; ce profil montre que, dans les 20 premiers microns, la concentration en zircone, représentative de la proportion de fumée de silice, est beaucoup plus élevée que dans la couche interne, dans le volume de l'échantillon ; ce résultat confirme donc les observations précédentes.

Par la même méthode appliquée à CaO et à $SiO_2$, on peut déterminer les proportions de calcium et de silicium contenues dans les hydrates de la surface, et donc en déduire le rapport $CaO/SiO_2$ (C/S en notation cimentaire) ; il ressort de ces mesures que, en surface, la pâte de BHP contient une plus grande proportion de $SiO_2$ que de CaO alors que, dans le volume, cette tendance s'inverse ; ainsi, si l'on se réfère aux profils de concentration moyennés, le rapport $CaO/SiO_2$ (C/S en notation cimentaire) est inférieur à 1 dans les 50 premiers pm à partir de la surface est devient supérieur à 1 au delà, plus en profondeur (jusqu'à 200 $\mu$m).

A partir d'analyses de la surface par diffraction des rayons X, on peut déterminer la structure cristallographique des hydrates présents à la surface des pièces en béton selon l'invention ; afin d'éviter les interférences dues à la présence de granulats, on effectue ces analyses sur des échantillons prélevés à la surface de pièces réalisés sans granulats, comme précédemment.

On coule une pâte, de type « BHP » selon l'exemple 1, dans un moule plastique à surface apolaire et sans huile de décoffrage ; ce moule est ensuite été recouvert d'un film plastique et placé dans un sac étanche durant 72 heures ; après décoffrage, on constate que la pièce obtenue présente état de surface de la pâte lisse et brillant ; cette pièce est stockée immédiatement dans un dessiccateur, afin d'éviter la carbonatation de la surface de la pâte, qui est lui-même placé dans un caisson étanche de manipulation, sous atmosphère d'azote.

Dans ce caisson, on effectue des prélèvement d'échantillons de la surface de la pièce en béton :

- par grattage mécanique de la surface, un premier échantillon représentatif de la couche « externe », correspondant à une profondeur comprise entre l'extrême surface et 2,5 $\mu$m environ ;
- par la même méthode, un deuxième échantillon représentatif d'une couche dite « intermédiaire » correspondant à une profondeur comprise entre 2,5 $\mu$m environ et 7,5 $\mu$m environ ;
- un troisième échantillon prélevé dans le volume de la pâte à l'aide d'une ponceuse, représentatif d'une couche dite « interne ».

Les profondeurs ci-dessus en $\mu$m sont estimées par pesée en considérant que la masse volumique de la pâte est de 2300 kg/m$^3$.

La figure 15 illustre les diffractogrammes obtenus pour les trois échantillons de poudre prélevés ; du haut vers le bas de la figure 15 : couche externe, couche intermédiaire, couche interne.

Le diffractogramme de la couche externe se différencie nettement des deux autres par un « halo » nettement plus marqué, masquant les pics de diffraction, ce qui indique que cette couche externe comporte une quantité plus importante de phases non cristallisées, qui peut avoir une ou plusieurs origines : présence d'une quantité de C-S-H amorphe plus élevée, présence d'une quantité de fumée de silice plus importante et/ou présence de matière organique, provenant par exemple de l'agent tensio-actif, ici superplastifiant.

De plus, dans cette couche externe, on constate que les proportions de clinker, c'est à dire de grains de ciment non hydratés, sont plus faibles que dans les autres couches.

Il y a peu de différences entre le diffractogramme de la couche intermédiaire et celui de la couche interne.

Sur les trois diffractogrammes, la calcite n'a pas été observée, ce qui prouve que les précautions prises afin d'éviter la carbonatation des prélèvements ont été efficaces.

L'analyse chimique globale (% pondéral) des trois échantillons prélevés donnent les résultats indiqués au tableau VII.

Ces résultats confirment les analyses spectrométrie à dispersion d'énergie concernant la fumée de silice, CaO et $SiO_2$, puisque :

- la concentration en zirconium, représentative de celle de fumée de silice, est élevée dans la couche externe ; cette concentration est nettement supérieure à celle de la couche intermédiaire et légèrement supérieure à celle de la couche interne.
- la composition de la couche externe diffère de celle de la couche interne par un dosage en CaO plus faible et un dosage en $SiO_2$ plus élevé.

Par ailleurs, la zone intermédiaire se distingue des deux autres zones parce qu'elle en comporte une forte proportion d'oxyde de calcium et une faible quantité de silice ; la forte concentration en CaO dans cette zone ne provient pas de la portlandite ni de la calcite puisque des essais n'analyse thermogravimétrique ont montré que, dans cette couche intermédiaire, la concentration des hydrates est faible ; cette forte concentration indiquerait donc une concentration plus importante en ciment anhydre qu'en surface extrême (couche externe).

Tableau VII -

| Analyses chimiques comparées du béton - surface vers le coeur. | | | |
|---|---|---|---|
| Couche : | Externe | Intermédiaire | interne |
| Pertes au feu (sous azote) | 21,86% | 10,39% | 13,68% |
| $SiO_2$ | 33,30 | 30,34 | 32,40 |
| $Al_2O_3$ | 2,27 | 3,27 | 2,98 |
| $Fe_2O_3$ | 1,10 | 1,59 | 1,43 |
| CaO | 38,04 | 51,25 | 46,18 |
| MgO | 0,79 | 0,81 | 0,68 |
| $SO_3$ | 1,37 | 1,28 | 1,45 |
| $Na_2O$ | 0,27 | 0,20 | 0,22 |
| $K_2O$ | 0,39 | 0,30 | 0,35 |
| $TiO_2$ | 0,09 | 0,12 | 0,11 |
| MnO | < 0,01 | 0,01 | 0,01 |
| $P_2O_5$ | 0,09 | 0,08 | 0,09 |
| SrO | 0,10 | 0,12 | 0,11 |
| Cr203 | 0,01 | 0,01 | 0,01 |
| Zr | 0,40 | 0,28 | 0,36 |
| Total | 99,99 | 100,06 | 100,06 |

Des mesures de perméabilité à l'eau permettent de confirmer la très faible porosité de la surface des pièces en béton selon l'invention et d'évaluer la capacité de cette surface à empêcher la pénétration de liquides, notamment d'agents agressifs, ce qui est l'un des buts poursuivi par l'invention dans le domaine des outils d'emboutissage.

Pour ces mesures, à partir des formulations « BHP » et « BTHP » de l'exemple 1, des blocs ont été coulés dans des moules plastiques sans huile de décoffrage; puis, quatre carottages de 94 mm de diamètre ont été effectués dans chaque bloc ; dans chaque carotte, des cylindres de 50 mm de hauteur ont été prélevés, l'un à l'extrémité de la carotte dont une des bases comprend la surface lisse du bloc appelé « cylindre de surface », l'autre au milieu de la carotte appelé « cylindre de coeur».

La perméabilité à l'eau a été ensuite mesurée sur les cylindres prélevés dans les carottes par une méthode dont les caractéristiques sont présentées dans le tableau VIII.

Tableau VIII -

| Conditions de mesures de perméabilité à l'eau. | |
|---|---|
| Rayon de l'éprouvette [m] | 0,047 |
| Rayon du tube [m] | 0,0035 |
| Pression appliquée [$10^{+5}$ Pa] | 6 |
| Hauteur de l'éprouvette [m] | 0,032 |
| Surface de l'éprouvette [$m^2$] | $6,94.10^{-3}$ |

Les résultats obtenus sont reportés au tableau IX : coefficients de perméabilité exprimés en $m^2$.

Tableau IX -

| Coefficients de perméabilité à l'eau (m$^2$) de cylindres de béton. | | | | | | |
|---|---|---|---|---|---|---|
| Cylindre : | Surface 1 | Surface 2 | Moyenne «Surface» | Coeur 1 | Coeur 2 | Moyenne « coeur » |
| BHP | $3,1.10^{-20}$ | $4,0.10^{-20}$ | $3,55.10^{-20}$ | $27.10^{-20}$ | $43.10^{-20}$ | $35.10^{-20}$ |
| BTHP | $2,4.10^{-20}$ | $2,5.10^{-20}$ | $2,45.10^{-20}$ | $18.10^{-20}$ | $38.10^{-20}$ | $28.10^{-20}$ |

Ces résultats des mesures de perméabilité à l'eau du BHP et du BTHP en surface et à coeur montrent que, pour les deux formulations de bétons, grâce à l'invention, la perméabilité de la surface des pièces est réduite d'un facteur 10 environ par rapport à celle du coeur en béton de la pièce.

De l'ensemble des analyses et observations de la surface des pièces en béton selon l'invention de cet exemple, ainsi que des résultats des essais de pénétration de l'exemple 4, on déduit que cette surface comprend trois couches ou strates distinctes :

- Une première couche « externe » de 5 µm environ d'épaisseur, composée principalement de particules de fumée de silice agglomérées et de cristaux de portlandite ; cette couche s'use rapidement puisque les cristaux de portlandite ont de faibles caractéristiques mécaniques et que les particules de fumées de silice sont faiblement hydratées ; de plus, lorsque cette couche est exposée à l'air libre, ses cristaux de portlandite peuvent se carbonater, ce qui entraîne la formation d'une fine couche de calcite.
- Une deuxième couche « intermédiaire », beaucoup plus dense et imperméable aux liquides, qui s'étend de 5 µm de profondeur environ à quelques dizaines de microns (70 à 100 µm) de profondeur ; cette couche est plus imperméable que la pâte de béton dans le coeur de la pièce ; elle contient une plus grande proportion de pâte que le coeur, ce qui est du à l'effet de paroi de moule des granulats, et sa résistance mécanique est légèrement supérieure à celle du coeur de la pièce.
- Une troisième zone correspondant au volume ou au coeur du béton.

**Revendications**

1. Procédé de préparation d'une pièce en béton présentant une surface lisse comprenant :

 - une étape de préparation d'une formulation de béton comprenant au moins un liant hydraulique, de l'eau pour hydrater le liant,
 - une étape de coulage de ladite formulation dans un moule aux formes de ladite pièce, au moins au contact des parois de ce moule correspondant à ladite surface lisse,
 - une étape de cure de ladite pièce coulée dans son moule,
 - et une étape de démoulage,

   caractérisé en ce que :

 - les parois dudit moule, correspondant à ladite surface lisse, ne sont pas enduites d'agent de démoulage hydrophobe et présentent une énergie de surface inférieure à 35 mJ/m$^2$,
 - ladite formulation comprend au moins un agent tensio-actif adapté, en nature et en proportions, pour que, additionné à de l'eau pure, il confère à l'eau additionnée une énergie de surface inférieure à 50 mJ/m$^2$.
 - le taux d'humidité et la durée de cure sont amenés à un niveau suffisamment élevé pour optimiser la facilité de démoulage et la qualité lisse de ladite surface.

2. Procédé selon la revendication 1 caractérisé en ce que la paroi du moule, la nature et les proportions dudit agent tensio-actif, sont choisis de manière à ce que l'angle de mouillage d'une goutte d'eau pure additionnée selon ces proportions de cet agent tensio-actif et appliquée sur ladite paroi soit inférieur ou égal à 65°.

3. Procédé selon l'une quelconque des revendications 1 à 2, caractérisé en ce que les parois dudit moule sont à base de matériau polymère ou sont revêtues de matériau polymère.

4. Procédé selon la revendication 3 caractérisé en ce que ledit matériau polymère est choisi dans le groupe comprenant les polychlorures de vinyle, les polyoléfines comme le polypropylène ou le polyéthylène, les polyamides, les polyacrylates et les polyméthacrylates.

5. Procédé selon l'une quelconque des revendications précédentes caractérisé en ce que ladite formulation comprend également :

- une poudre fine pour obtenir un effet granulaire de compacité, et réactive avec les produits d'hydratation notamment dudit liant,
- et au moins un agent plastifiant ou superplastifiant pour obtenir un effet dispersant et rhéologique.

6. Procédé selon la revendication 5 caractérisé en ce que ladite poudre est à base de silice réactive de manière pouzzolanique avec lesdits produits d'hydratation.

7. Procédé selon la revendication 6 caractérisé en ce que l'agent superplastifiant est choisi dans le groupe comprenant les sels sodique de condensat de formaldéhyde et d'acide sulfonique naphtalène et les produit de type mélamine ou polyacrylate.

8. Procédé selon l'une quelconque des revendications 5 à 7 caractérisé en ce que l'au moins un agent tensio-actif est aussi l'agent plastifiant ou superplastifiant.

9. Procédé selon la revendication 8 caractérisé en ce que l'au moins un agent tensio-actif présente un caractère amphotère hydrophile/hydrophobe.

10. Procédé selon l'une quelconque des revendications précédentes caractérisé en ce que la concentration en agent tensio-actif et, le cas échéant, en agent plastifiant ou superplastifiant dans ladite formulation est supérieure seuil de saturation d'absorption par la surface des différentes particules solides de ladite formulation.

11. Procédé selon l'une quelconque des revendications précédentes caractérisé en ce que ladite formulation comprend des granulats dans une proportion supérieure à 10% en poids.

12. Utilisation du procédé selon l'une quelconque des revendications 1 à 11 pour fabriquer des pièces de peau.

13. Utilisation desdites pièces de peau selon la revendication 12 comme élément de couverture, de bardage, de cloisonnement ou de sol de bâtiment ou comme élément de mobilier urbain.

14. Utilisation du procédé selon l'une quelconque des revendications 5 à 11 pour fabriquer des outils d'emboutissage.

15. Utilisation selon la revendication 14, caractérisé en ce que, lorsque ladite formulation comprend des granulats, ces granulats sont choisis de manière à ce qu'ils présentent une vitesse d'usure comparable à celle de la pâte dudit béton.

16. Pièce en béton obtenue par un procédé selon l'une quelconque des revendications 1 à 11 à partir d'une formulation utilisant du ciment comme liant et comprenant de la poudre à base de silice caractérisée en ce qu'elle présente au moins une surface lisse sans bulle correspondant à une couche externe composée de fumée de silice, de portlandite et, le cas échéant, de calcite.

17. Pièce selon la revendication 16 caractérisée en ce que l'épaisseur de ladite couche externe est supérieure ou égale à 5 $\mu$m.

18. Pièce en béton obtenue par un procédé selon l'une quelconque des revendications 5 à 11 à partir d'une formulation utilisant du ciment comme liant et une poudre de silice comme poudre réactive caractérisée en qu'elle présente au moins une surface lisse sans bulle qui comprend une couche « intermédiaire » dans laquelle la proportion de poudre réactive de silice est au moins égale à 1,5 fois la proportion moyenne de cette poudre dans ladite formulation.

19. Pièce selon la revendication 18 caractérisée en ce que l'épaisseur de ladite couche « intermédiaire » est comprise entre 10 et 150 $\mu$m.

20. Pièce en béton selon l'une quelconque des revendications 16 à 17 et selon l'une quelconque des revendications 18 à 19, caractérisé en ce que ladite couche externe est appuyée sur ladite couche « intermédiaire ».

Fig.1

Fig.2

Fig.3

Fig.4

Fig.5

Fig.6

Fig.7

Fig.8A

Fig.8B

Fig.9

Fig.10

Fig.11

Fig.12

Fig.13

Fig.14

Fig.15

**Office européen des brevets**

# RAPPORT DE RECHERCHE EUROPEENNE

Numéro de la demande

EP 00 40 1871

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 4 088 808 A (CORNWELL CHARLES E ET AL) 9 mai 1978 (1978-05-09) * revendications 1-3 * | 1,3-7, 11-13 | C04B28/02 C04B40/00 B28B7/00 //(C04B28/02, 14:28,18:14, 24:22), (C04B28/02, 14:28,18:14, 24:26) |
| A | US 4 036 939 A (JACQUES MICHEL JEAN ET AL) 19 juillet 1977 (1977-07-19) * revendications 1,4 * | 1,16-20 | |
| A | CHEMICAL ABSTRACTS, vol. 117, no. 12, 21 septembre 1992 (1992-09-21) Columbus, Ohio, US; abstract no. 117252j, Y. FUJIWARA: page 355; XP000376858 * abrégé * & JP 04 104926 A (ID.) 7 avril 1992 (1992-04-07) | 1,5-7 | |
| A | FR 2 070 363 A (INCENTIVE AB) 10 septembre 1971 (1971-09-10) * revendications 1,2 * | 1,12,16, 18 | DOMAINES TECHNIQUES RECHERCHES (Int.Cl.7) |
| A,D | EP 0 273 181 A (CEMCOM CORP) 6 juillet 1988 (1988-07-06) * page 2, ligne 35-37 * * page 5, ligne 13-25 * * page 6, ligne 1-12 * * page 2, ligne 49 - page 3, ligne 4 * | 1,14 | B28B C04B |

-/--

Le présent rapport a été établi pour toutes les revendications

| Lieu de la recherche | Date d'achèvement de la recherche | Examinateur |
|---|---|---|
| LA HAYE | 11 septembre 2000 | Daeleman, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**Office européen des brevets**

## RAPPORT DE RECHERCHE EUROPEENNE

Numéro de la demande

EP 00 40 1871

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | CHEMICAL ABSTRACTS, vol. 114, no. 6, 11 février 1991 (1991-02-11) Columbus, Ohio, US; abstract no. 48529d, C. NISHIOKA, ET AL.: page 347; XP000186436 * abrégé * & JP 02 136202 A (ID.) 24 mai 1990 (1990-05-24) | | |
| A | WO 93 14043 A (CRUAUD WILLIAM ;CRUAUD CHRISTIAN (FR)) 22 juillet 1993 (1993-07-22) | | |

DOMAINES TECHNIQUES RECHERCHES (Int.Cl.7)

Le présent rapport a été établi pour toutes les revendications

| Lieu de la recherche | Date d'achèvement de la recherche | Examinateur |
|---|---|---|
| LA HAYE | 11 septembre 2000 | Daeleman, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 00 40 1871

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

11-09-2000

| Document brevet cité au rapport de recherche | | Date de publication | Membre(s) de la famille de brevet(s) | | Date de publication |
|---|---|---|---|---|---|
| US 4088808 | A | 09-05-1978 | US | 4036839 A | 19-07-1977 |
| | | | US | 4310486 A | 12-01-1982 |
| | | | US | 4098755 A | 04-07-1978 |
| US 4036939 | A | 19-07-1977 | FR | 2227216 A | 22-11-1974 |
| | | | BE | 813189 A | 31-07-1974 |
| | | | DE | 2419861 A | 07-11-1974 |
| | | | GB | 1420542 A | 07-01-1976 |
| | | | JP | 50018387 A | 26-02-1975 |
| | | | LU | 69909 A | 06-08-1974 |
| | | | NL | 7405081 A | 28-10-1974 |
| | | | SU | 655301 A | 30-03-1979 |
| JP 04104926 | A | 07-04-1992 | AUCUN | | |
| FR 2070363 | A | 10-09-1971 | AUCUN | | |
| EP 0273181 | A | 06-07-1988 | US | 4780141 A | 25-10-1988 |
| | | | BR | 8706449 A | 12-07-1988 |
| | | | JP | 63170252 A | 14-07-1988 |
| JP 02136202 | A | 24-05-1990 | JP | 1693803 C | 17-09-1992 |
| | | | JP | 3062528 B | 26-09-1991 |
| WO 9314043 | A | 22-07-1993 | FR | 2686112 A | 16-07-1993 |
| | | | AT | 166331 T | 15-06-1998 |
| | | | AU | 3455493 A | 03-08-1993 |
| | | | CA | 2126355 A | 22-07-1993 |
| | | | DE | 69318698 D | 25-06-1998 |
| | | | EP | 0620806 A | 26-10-1994 |
| | | | JP | 7502722 T | 23-03-1995 |
| | | | US | 5478390 A | 26-12-1995 |

EPO FORM P0460

Pour tout renseignement concernant cette annexe : voir Journal Officiel de l'Office européen des brevets, No.12/82